(19) Europäisches Patentamt European Patent Office Office européen des brevets

(11) **EP 4 517 673 A1**

(12) **EUROPEAN PATENT APPLICATION**
published in accordance with Art. 153(4) EPC

(43) Date of publication:
05.03.2025 Bulletin 2025/10

(21) Application number: 23823208.6

(22) Date of filing: 15.06.2023

(51) International Patent Classification (IPC):
*G06T 15/00* (2011.01)

(52) Cooperative Patent Classification (CPC):
G06T 1/60; G06T 15/00

(86) International application number:
PCT/CN2023/100345

(87) International publication number:
WO 2023/241642 (21.12.2023 Gazette 2023/51)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.06.2022 CN 202210687770

(71) Applicant: Huawei Technologies Co., Ltd.
Shenzhen, Guangdong 518129 (CN)

(72) Inventors:
• HE, Xiaowei
Beijing 100190 (CN)
• SU, Mingcai
Shenzhen, Guangdong 518129 (CN)
• ZHU, Wei
Shenzhen, Guangdong 518129 (CN)
• JIANG, Tonglin
Shenzhen, Guangdong 518129 (CN)
• FAN, Chenfei
Shenzhen, Guangdong 518129 (CN)

(74) Representative: Epping - Hermann - Fischer
Patentanwaltsgesellschaft mbH
Schloßschmidstraße 5
80639 München (DE)

(54) **RENDERING METHOD AND APPARATUS**

(57) This application provides a rendering method and apparatus in the vision field, to indicate various types of objects in a to-be-rendered zone by using a density field. This implements real-time fluid simulation effect in a plurality of scenarios. The method includes: first constructing a first phase field based on information about a to-be-rendered zone, where the first phase field indicates density distribution in the to-be-rendered zone; then obtaining acting force on the to-be-rendered zone, namely, external force on a fluid, where the fluid flows under action of the external force; obtaining, with reference to the first phase field, velocity distribution of each point in the to-be-rendered zone, namely, a velocity field; performing an advection operation on the first phase field based on the velocity field to obtain density distribution obtained by performing the advection operation on the fluid in the to-be-rendered zone, namely, a second phase field; and rendering the to-be-rendered zone based on the second phase field to obtain a rendering frame.

```
┌─────────────────────────────────────┐
│ Construct a first phase field based  │──── 301
│ on information about a to-be-         │
│ rendered zone                        │
└─────────────────────────────────────┘
                 │
                 ▼
┌─────────────────────────────────────┐
│ Obtain acting force on the to-be-    │──── 302
│ rendered zone                        │
└─────────────────────────────────────┘
                 │
                 ▼
┌─────────────────────────────────────┐
│ Obtain a velocity field with         │──── 303
│ reference to the first phase field   │
│ and a signed distance field          │
└─────────────────────────────────────┘
                 │
                 ▼
┌─────────────────────────────────────┐
│ Perform an advection operation on    │──── 304
│ the first phase field based on the   │
│ velocity field to obtain a second    │
│ phase field                          │
└─────────────────────────────────────┘
                 │
                 ▼
┌─────────────────────────────────────┐
│ Render the to-be-rendered zone       │──── 305
│ based on the second phase field to   │
│ obtain a rendering frame             │
└─────────────────────────────────────┘
```

FIG. 3

EP 4 517 673 A1

## Description

This application claims priority to Chinese Patent Application No. 202210687770.2, filed with the China National Intellectual Property Administration on June 17, 2022 and entitled "RENDERING METHOD AND APPARATUS", which is incorporated herein by reference in its entirety.

## TECHNICAL FIELD

This application relates to the field of image rendering, and in particular, to a rendering method and apparatus.

## BACKGROUND

Fluid simulation is a research hotspot in the field of computer graphics, and is an important and challenging research topic that develops with computational fluid dynamics.

Computational fluid dynamics is applied to many fields in the industry, such as aerospace, civil and hydraulic engineering, and environmental chemical engineering. Especially, with rapid development of computer technologies in the past half century, computational methods and analysis theories for fluid simulation have been continuously improved, so that it is possible to accurately compute and simulate fluid motion. Conventional prototype test methods have the following disadvantages: high costs, long simulation test cycles, and a difficulty in reproducing all test scenarios in a laboratory condition. However, software simulation can greatly shorten a research and development cycle, and greatly reduce research and development costs. For example, in some common fluid rendering manners, a fluid is considered to be formed by discrete particles. Therefore, all particles need to be computed in each time step. Especially, a neighborhood search process is extremely performance consuming, and especially in a scenario in which an incompressible fluid is coupled to a solid, and the like, it is difficult to implement real-time simulation effect. Therefore, how to better implement fluid motion rendering becomes an urgent problem to be resolved.

## SUMMARY

This application provides a rendering method and apparatus, to indicate various types of objects in a to-be-rendered zone by using a density field. This implements real-time fluid simulation effect in a plurality of scenarios.

In view of this, in a first aspect, this application provides a rendering method. The method includes: first constructing a first phase field based on information about a to-be-rendered zone, where the first phase field indicates density distribution in the to-be-rendered zone; then obtaining acting force on the to-be-rendered zone, namely, external force on a fluid, where the fluid in the to-be-rendered zone flows under action of the acting force; obtaining, with reference to the first phase field and a signed distance field, velocity distribution of each point in the to-be-rendered zone, namely, a velocity field; performing an advection operation on the first phase field based on the velocity field to obtain density distribution obtained by performing the advection operation on the fluid in the to-be-rendered zone, namely, a second phase field; and rendering the to-be-rendered zone based on the second phase field to obtain a rendering frame.

Therefore, in this implementation of this application, the phase field is constructed to indicate density of each to-be-rendered graphic in the to-be-rendered zone. In this way, real-time simulation effect can be implemented for graphs of different forms, for example, a graphic in which an incompressible fluid is coupled to a solid. It may be understood as using the phase field to discretize a fluid computational domain, to solve for a numerically continuous density field. This quickly extracts a density isosurface, and quickly reconstructs a fluid surface.

In a possible implementation, the method may further include: obtaining a signed distance field of the to-be-rendered zone, where the signed distance field includes distance distribution between each point in the to-be-rendered zone and an object in the to-be-rendered zone. The obtaining a velocity field based on the first phase field may include: obtaining the velocity field with reference to the first phase field and the signed distance field.

Therefore, in this implementation of this application, with reference to the signed distance field, gas, liquid, and solid are modeled into a continuous medium, and a same equation is constructed, to implement same modeling and solution of a dynamic issue including three phases, namely, the gas, liquid, and solid. Therefore, for coupling of the incompressible fluid and the solid, the real-time simulation effect can be implemented.

In a possible implementation, a type of the to-be-rendered object in the to-be-rendered zone includes the fluid and the solid, and the signed distance field may be constructed based on a distance between the object in the to-be-rendered zone and a boundary or a central point of the solid in the to-be-rendered zone.

In a possible implementation, before the rendering the to-be-rendered zone based on the second phase field, the method further includes: the to-be-rendered object in the to-be-rendered zone includes a fluid and a solid, and diffusing, in a corresponding gradient direction in the signed distance field, a fluid part that penetrates into the solid, to update the second phase field to obtain a new second phase field.

Therefore, in this implementation of this application, after the object in the to-be-rendered zone includes the flowable fluid and incompressible solid, when the fluid is diffused, the fluid part that penetrates into the solid may be diffused in the gradient direction in the signed distance field, to maintain fluid volume conservation. In this case, the fluid is distinguished from the solid, and the fluid volume conservation is maintained. It may be understood that, to prevent the fluid from penetrating into a solid zone, the fluid that penetrates into an interior of the solid may be corrected with reference to a diffusion equation of the signed distance field, so that the fluid volume conservation is maintained, and the fluid does not penetrate into the solid.

In a possible implementation, the performing an advection operation on the first phase field based on the velocity field to obtain a second phase field may include: performing the advection operation, which is equivalent to diffusion in a horizontal direction, in the plurality of directions based on the velocity field, to obtain the second phase field. When the method provided in this application is deployed on a terminal, because it may be difficult for the terminal to perform an atomic operation, the advection operation may be performed in the plurality of directions. For example, in a three-dimensional rendering scenario, the advection operation may be performed in six directions, so that integration is performed in parallel in a plurality of directions, efficiently performing the advection operation.

In a possible implementation, the performing the advection operation in a plurality of directions to obtain the second phase field includes: performing the advection operation in the plurality of directions based on the velocity field by using a first-order upwind difference scheme, to obtain the second phase field. In this implementation of this application, the advection operation may be performed on the phase field in the plurality of directions by using the first-order upwind difference scheme. In addition, the advection operation may be further performed in a manner like forward Euler or backward Euler. This simulates fluid flow in a horizontal direction, and implements real-time simulation of a fluid status.

In a possible implementation, the method may further include: performing the advection operation on the velocity field to obtain an updated velocity field. Therefore, in this implementation of this application, the advection operation may be performed on the velocity field, so that a velocity included in the velocity field matches a real-time velocity of each object in the to-be-rendered zone. This can simulate a change status of the fluid more accurately, and implement more realistic simulation.

In a possible implementation, the rendering the to-be-rendered zone based on the second phase field to obtain a rendering frame may include: obtaining a third phase field by using a gradient of the second phase field, where the gradient of the second phase field indicates that the fluid flows from a low-density zone to a high-density zone in the to-be-rendered zone, and density of each point in the high-density zone is greater than density of each point in the low-density zone; and performing rendering based on density distribution of the to-be-rendered zone included in the third phase field to obtain the rendering frame.

Therefore, in this implementation of this application, the second phase field may be updated by using the gradient of the second phase field, to obtain the new third phase field. This is equivalent to that the fluid flows from the low-density zone to the high-density zone in the to-be-rendered zone based on the density distribution of the to-be-rendered zone included in the phase field. This can implement more realistic simulation of fluid flow.

In a possible implementation, the performing rendering based on density distribution of the to-be-rendered zone included in the third phase field to obtain the rendering frame may include: performing a smoothing operation on the third phase field to obtain a fourth phase field; and performing rendering based on density distribution of the to-be-rendered zone included in the fourth phase field to obtain the rendering frame.

Therefore, in this implementation of this application, a balance operation may be performed on the phase field, so that fluid density in the to-be-rendered zone is evenly distributed, and a fluid feature is more consistent with a fluid feature in a practical scenario. This implements more realistic fluid simulation effect.

In a possible implementation, the type of the to-be-rendered object in the to-be-rendered zone includes the fluid and the solid, and the constructing a first phase field and a signed distance field based on information about a to-be-rendered zone may include: setting initial density for each sub-zone in the to-be-rendered zone based on the type of the to-be-rendered object in the to-be-rendered zone, to obtain the first phase field, where initial density in the fluid is different from initial density of the solid, and each sub-zone in the to-be-rendered zone is a zone obtained through division based on a preset granularity; and constructing the signed distance field based on a distance between the solid in the to-be-rendered zone and a solid boundary in the to-be-rendered zone.

Therefore, in this implementation of this application, the type of the to-be-rendered object included in the to-be-rendered zone may include the fluid and the solid. The initial density may be set based on a type of a geometric image in the to-be-rendered zone, and a type of each geometric image in the to-be-rendered zone is indicated by using the phase field. Because the obtained phase field is numerically continuous, both an iso-surface extraction manner and a ray casting manner can well match rendering, and an extracted liquid surface is smooth and particle-free. This can fit an irregular boundary well.

In a possible implementation, the method provided in this application may be applied to a terminal. The obtaining acting force on the to-be-rendered zone may include: obtaining the acting force on the to-be-rendered zone based on a sensor of the terminal, or obtaining the acting force on the to-be-rendered zone based on pressure sensed by the terminal by using a touchscreen.

Therefore, the method provided in this application may be deployed in the terminal, external force on the fluid in the to-be-rendered zone is obtained by using the sensor, the touchscreen, or the like disposed in the terminal. In this way, a user can control a flow direction of the fluid by controlling the terminal, improving user experience.

In a possible implementation, the obtaining the velocity field with reference to the first phase field and the signed distance field may include: constructing a pressure Poisson equation based on the first phase field; and solving the pressure Poisson equation to obtain the velocity field.

In a possible implementation, the obtaining the velocity field with reference to the first phase field and the signed distance field may include: constructing a pressure Poisson equation with reference to the first phase field and the signed distance field; and solving the pressure Poisson equation to obtain the velocity field.

Therefore, in this implementation of this application, gas, liquid, and solid are modeled into a continuous medium by using the signed distance field, and the same pressure Poisson equation is constructed, to implement same modeling and solution of a dynamic issue including three phases, namely, the gas, liquid, and solid. In addition, an optimized solution algorithm is used. This implements real-time interaction simulation of three phase materials, namely, the gas, the liquid, and the solid. This implementation can support a boundary and collision object material of any shape, and implement real-time interaction simulation of three phase materials, namely, the gas, the liquid, and the solid. Because the obtained phase field is numerically continuous, both an iso-surface extraction manner and a ray casting manner can well match rendering, and an extracted liquid surface is smooth and particle-free. This can well fit an irregular boundary. In addition, for problems that a common Euler method has a severe volume loss and a high requirement on solution accuracy of a numerical algorithm, in this application, three-dimensional fluid simulation of a mobile terminal is implemented by using an Euler framework, and the phase field is introduced to model the fluid as a weakly compressible fluid.

According to a second aspect, this application provides a rendering apparatus, including:

a construction module, configured to construct a first phase field based on information about a to-be-rendered zone, where the first phase field indicates density distribution in the to-be-rendered zone;
an obtaining module, configured to obtain acting force on the to-be-rendered zone;
a computing module, configured to obtain a velocity field with reference to the first phase field and a signed distance field, where a fluid in the to-be-rendered zone flows under action of the acting force, and the velocity field includes velocity distribution of each point in the to-be-rendered zone;
an advection module, configured to perform an advection operation on the first phase field based on the velocity field to obtain a second phase field, where the second phase field includes density distribution obtained by performing the advection operation on the fluid in the to-be-rendered zone; and
a rendering module, configured to render the to-be-rendered zone based on the second phase field to obtain a rendering frame.

In a possible implementation, the construction module is further configured to obtain a signed distance field of the to-be-rendered zone, where the signed distance field includes distance distribution between each point in the to-be-rendered zone and an object in the to-be-rendered zone; and
the computing module is specifically configured to obtain the velocity field with reference to the first phase field and the signed distance field.

In a possible implementation, a to-be-rendered object in the to-be-rendered zone includes a fluid and a solid, and the rendering apparatus further includes:
a diffusion module, configured to: before the rendering module renders the to-be-rendered zone based on the second phase field, diffuse, in a corresponding gradient direction in the signed distance field, a fluid part that penetrates into the solid, to update the second phase field to obtain a new second phase field.

In a possible implementation, the advection module is specifically configured to perform the advection operation in a plurality of directions based on the velocity field to obtain the second phase field.

In a possible implementation, the advection module is specifically configured to perform the advection operation in the plurality of directions based on the velocity field by using a first-order upwind difference scheme, to obtain the second phase field.

In a possible implementation, the advection module is further configured to perform the advection operation on the velocity field to obtain an updated velocity field.

In a possible implementation, the rendering module is specifically configured to: obtain a third phase field by using a gradient of the second phase field, where the gradient of the second phase field indicates that the fluid flows from a low-density zone to a high-density zone in the to-be-rendered zone, and density of each point in the high-density zone is greater than density of each point in the low-density zone; and perform rendering based on density distribution of the to-be-rendered zone included in the third phase field to obtain the rendering frame.

In a possible implementation, the rendering module is specifically configured to: perform a smoothing operation on the third phase field to obtain a fourth phase field; and perform rendering based on density distribution of the to-be-rendered zone included in the fourth phase field to obtain the rendering frame.

In a possible implementation, the type of the to-be-rendered object in the to-be-rendered zone includes the fluid and the solid, and the construction module is specifically configured to: set initial density for each sub-zone in the to-be-rendered zone based on the type of the to-be-rendered object in the to-be-rendered zone, to obtain the first phase field, where initial density in the fluid is different from initial density of the solid, and each sub-zone in the to-be-rendered zone is a zone obtained through division based on a preset granularity; and construct the signed distance field based on a distance between the solid in the to-be-rendered zone and a solid boundary in the to-be-rendered zone.

In a possible implementation, the apparatus is used in a terminal, and the obtaining module is specifically configured to: obtain the acting force on the to-be-rendered zone based on a sensor of the terminal, or obtain the acting force on the to-be-rendered zone based on pressure sensed by the terminal by using a touchscreen.

In a possible implementation, the computing module is specifically configured to: construct a pressure Poisson equation based on the first phase field; and solve the pressure Poisson equation to obtain the velocity field.

In a possible implementation, the computing module is specifically configured to: construct a pressure Poisson equation with reference to the first phase field and the signed distance field; and solve the pressure Poisson equation to obtain the velocity field.

According to a third aspect, an embodiment of this application provides a rendering apparatus. The rendering apparatus has a function of performing the image processing method in the first aspect. The function may be implemented by hardware, or by hardware executing corresponding software. The hardware or the software includes one or more modules corresponding to the foregoing function.

According to a fourth aspect, an embodiment of this application provides a rendering apparatus, including a processor and a memory. The processor and the memory are interconnected by using a line. The processor invokes program code in the memory to perform a processing-related function in the rendering method in any implementation of the first aspect. Optionally, the rendering apparatus may be a chip.

According to a fifth aspect, an embodiment of this application provides a rendering apparatus. The rendering apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in the first aspect or any optional implementation of the first aspect.

According to a sixth aspect, this application provides an electronic device, including a central processing unit (central processing unit, CPU) and a graphics processing unit (graphics processing unit, GPU).

The GPU is configured to construct a first phase field based on information about a to-be-rendered zone, where the first phase field indicates density distribution in the to-be-rendered zone.

The CPU is configured to: obtain acting force on the to-be-rendered zone, and transmit the acting force to the GPU.

The GPU is further configured to obtain a velocity field based on the first phase field, where a fluid in the to-be-rendered zone flows under action of the acting force, and the velocity field includes velocity distribution of each point in the to-be-rendered zone.

The GPU is further configured to perform an advection operation on the first phase field based on the velocity field to obtain a second phase field, where the second phase field includes density distribution obtained by performing the advection operation on the fluid in the to-be-rendered zone.

The GPU is further configured to render the to-be-rendered zone based on the second phase field to obtain a rendering frame.

In a possible implementation, the GPU is further configured to: obtain a signed distance field of the to-be-rendered zone, where the signed distance field includes distance distribution between each point in the to-be-rendered zone and an object in the to-be-rendered zone; and obtain the velocity field with reference to the first phase field and the signed distance field.

In a possible implementation, a to-be-rendered object in the to-be-rendered zone includes a fluid and a solid, and the GPU is further configured to: before rendering the to-be-rendered zone based on the second phase field, diffuse, in a corresponding gradient direction in the signed distance field, a fluid part that penetrates into the solid, to update the second phase field to obtain a new second phase field.

In a possible implementation, the GPU is specifically configured to perform the advection operation on the first phase field in a plurality of directions based on the velocity field to obtain the second phase field.

In a possible implementation, the GPU is specifically configured to perform the advection operation on the first phase field in the plurality of directions based on the velocity field by using a first-order upwind difference scheme, to obtain the second phase field.

In a possible implementation, the GPU is further configured to perform the advection operation on the velocity field to obtain an updated velocity field.

In a possible implementation, the GPU is specifically configured to: obtain a third phase field by using a gradient of the second phase field, where the gradient of the second phase field indicates that the fluid flows from a low-density zone to a high-density zone in the to-be-rendered zone, and density of each point in the high-density zone is greater than density of each point in the low-density zone; and perform rendering based on density distribution of the to-be-rendered zone included in the third phase field to obtain the rendering frame.

In a possible implementation, the GPU is specifically configured to: perform a smoothing operation on the third phase field to obtain a fourth phase field; and perform rendering based on density distribution of the to-be-rendered zone included in the fourth phase field to obtain the rendering frame.

In a possible implementation, a type of the to-be-rendered object in the to-be-rendered zone includes the fluid and the solid.

The GPU is specifically configured to set initial density for each sub-zone in the to-be-rendered zone based on the type of the to-be-rendered object in the to-be-rendered zone, to obtain the first phase field, where initial density in the fluid is different from initial density of the solid, and each sub-zone in the to-be-rendered zone is a zone obtained through division based on a preset granularity.

In a possible implementation, the electronic device further includes a sensor or a touchscreen, and the CPU is specifically configured to obtain the acting force on the to-be-rendered zone based on the sensor, or obtain the acting force on the to-be-rendered zone based on pressure sensed by using the touchscreen.

In a possible implementation, the GPU is specifically configured to: construct a pressure Poisson equation based on the first phase field; and solve the pressure Poisson equation to obtain the velocity field.

According to a seventh aspect, an embodiment of this application provides a computer-readable storage medium including instructions. When the instructions are run on a computer, the computer is enabled to perform the method in the first aspect or any optional implementation of the first aspect.

According to an eighth aspect, an embodiment of this application provides a computer program product including instructions. When the computer program product runs on a computer, the computer is enabled to perform the method in the first aspect or any optional implementation of the first aspect.

**BRIEF DESCRIPTION OF DRAWINGS**

FIG. 1 is a diagram of a structure of an electronic device according to this application;
FIG. 2 is a diagram of a structure of a terminal according to this application;
FIG. 3 is a schematic flowchart of a rendering method according to this application;
FIG. 4 is a diagram of an application architecture of a rendering method according to this application;
FIG. 5 is another diagram of an application architecture of a rendering method according to this application;
FIG. 6 is another diagram of an application architecture of a rendering method according to this application;
FIG. 7 is another schematic flowchart of a rendering method according to this application;
FIG. 8 is a diagram of a phase field according to this application;
FIG. 9 is a diagram of a signed distance field according to this application;
FIG. 10 is a diagram of effect of a common rendering manner according to this application;
FIG. 11 is a diagram of rendering effect according to this application;
FIG. 12 is another diagram of effect of a common rendering manner according to this application;
FIG. 13 is another diagram of rendering effect according to this application;
FIG. 14 is another diagram of a phase field and rendering effect according to this application;
FIG. 15 is a diagram of a structure of a rendering apparatus according to this application; and
FIG. 16 is another diagram of a structure of a rendering apparatus according to this application.

**DESCRIPTION OF EMBODIMENTS**

The following describes the technical solutions in embodiments of this application with reference to the accompanying drawings in embodiments of this application. It is clearly that the described embodiments are only some rather than all of embodiments of this application. All other embodiments obtained by a person of ordinary skill in the art based on embodiments of this application without creative efforts shall fall within the protection scope of this application.

Computational fluid dynamics is applied to many fields in the industry, such as aerospace, civil and hydraulic engineering, and environmental chemical engineering. Especially, with rapid development of computer technologies in the past half century, computational methods and analysis theories for fluid simulation have been continuously improved, so that it is possible to accurately compute and simulate fluid motion. Software simulation can greatly shorten a research and development cycle and save research and development costs. In this context, various commercial computational fluid dynamics (computational fluid dynamics, CFD) software emerges. With continuous improvement in function and performance, the CFD software is currently widely used in engineering applications. In the field of engineering applications or films, a simulation environment needs to match an actual situation to obtain a precise computational result. In the fields of games and computer animations, water simulation requires good simulation effect and high performance, and more attention is paid to visual effect.

Computational fluid dynamics is a cross-disciplinary subject including fluid dynamics, numerical analysis, and computer technology. A Navier-Stokes equation (N-S equation for short) is a theoretical basis of the fluid dynamics and reflects a basic mechanical law of real fluid flow. The N-S equation is a nonlinear partial differential equation. Different from a common mechanical equation, a solution of the N-S equation is a "velocity field", which is a physical description of a velocity at given spatial and temporal locations.

To obtain the solution of the N-S equation, there are usually two methods: a Lagrange method and an Euler method. Descriptions of fluid motion by using the two methods are referred to as a Lagrange description and an Euler description respectively.

The Lagrange description considers a continuum as a form similar to a particle. Each point in the continuum is considered as an independent particle, and the particle has a corresponding location attribute and velocity attribute.

The Euler description method uses a completely different angle. The Lagrange description tracks each object particle, while the Euler description focuses on a fixed point in space, and focuses on how a physical quantity (like density, velocity, and temperature) at the fixed point change with time. Both Euler and Lagrange methods can be used in real time. The Euler method uses some optimization means to implement real-time simulation, and the Lagrange method is mostly used in other cases. Compared with the Euler method, the Lagrange method is simple and faster. A smoothed particle hydrodynamics (smoothed particle hydrodynamics, SPH) method is a representative theory of the Lagrange method, and many improved algorithms are derived based on the SPH algorithm.

In some commonly used three-dimensional fluid simulation manners, a relatively large computational amount is usually required.

For example, real-time fluid simulation usually uses an SPH solution. A core idea of the algorithm is to consider a fluid as being composed of discrete particles. An implementation idea of using the algorithm is as follows: A computational fluid zone is initialized to be indicated by using the particles. The computational fluid zone is initialized to particles at an equal interval, and initial attributes such as a particle radius and mass are specified. A constant function is approximated by using an integral representation method of a kernel function. A kernel function equation is further approximated by using a particle. An approximation process of all particles is performed in each time step. A particle approximation method is used in all partial differential equation sets, to obtain a series of discretized ordinary differential equation. An ordinary differential equation set is solved, to obtain time-varying values of all particle field variables, and then rendering is performed based on the values, to obtain a rendered simulation diagram. However, the SPH discretizes the computational fluid zone into the particles. Therefore, all the particles need to be computed in each time step. Especially, a neighborhood search process is extremely performance consuming. Therefore, it is difficult to implement real-time simulation effect without appropriate optimization. In addition, rendering of the SPH also poses a significant challenge. Finally, an ultimate target is to present water, but not the particles. Therefore, currently, surface reconstruction methods are commonly used. These algorithms also cause a performance loss, and some detailed functions are lost.

For another example, a fluid simulation method is proposed by combining a position-based dynamics (position-based dynamics, PBD) method with the SPH method. Due to features such as simplicity, universality, and efficiency, the PBD algorithm is used in many game engines. Different from a conventional force-based solution idea, a solution idea of the PBD algorithm is based on constraint. The force-based idea needs to consider all force in a collision process, then calculate acceleration according to Newton's second law, and use numerical integration to solve for a velocity and a position. The position-based dynamics (position-based dynamics, PBD) method directly modifies an object position based on position constraint and then updates velocity information. Therefore, a calculation process is extremely simple and efficient. However, due to being derived from the SPH algorithm, the position-based dynamics method also inherits problems such as a large computational amount in SPH neighborhood search, and extremely high performance-consuming. Numerical accuracy obtained by a position-based fluid (Position Based Fluid, PBF) is less "physical" than that obtained by the SPH, and details are likely to be lost. In addition, the position-based dynamics method is not applicable to deployment in a mobile terminal.

For another example, the Lagrange method tracks particles that flow, and the Euler method observes a change of the physical quantity of the fluid at the fixed point in space. An Euler fluid divides a physical world into a plurality of small grids, and observes a flow particle change of each grid. A cumulative observation result of each grid is a global observation result. The Euler method decomposes the N-S equation in a discrete manner on the grid. Data is stored in a center or surface of the grid based on different strategies, and then the N-S equation is solved to obtain a real-time physical quantity of the fluid. In solution steps of the Euler method, a Poisson equation needs to be solved in a pressure projection step. Solving the equation is extremely performance-consuming. In addition, because a computational domain is divided into grids, it is difficult to accurately determine positions of a material interface and a free surface. The computing domain needs to be divided into finer grids to obtain effect of detail positions. This also greatly increases computational complexity and a computational amount. Therefore, most fluid simulation implemented by the Euler method is used for an offline scenario. However, this is only applicable to specific scenario optimization. Computing power is concentrated on water surface processing, and underwater simulation is greatly affected. In addition, this is not applicable to deployment in a mobile terminal.

It may be understood as that, in a current three-dimensional rendering scenario like the field of games or computer animation, fidelity and real-time performance are two goals to be pursued. For the fluid N-S equation, numerical computation methods can be divided into the Lagrange method and the Euler method. The Lagrange method has advantages such as a clear concept, ease of constructing a motion equation, ease of processing a boundary, and ease of showing splash effect. However, a computational result of the Lagrange method depends on selection of a kernel function. Different kernel functions have great differences in computational precision, value stability, and computational efficiency. In addition, to ensure incompressibility of the fluid, a smaller time step size needs to be selected, resulting in an increase in the computational amount. Finally, the Lagrange method is difficult to reconstruct a smooth liquid surface through particles, which makes it difficult to implement expected visual effect.

The Euler method has advantages such as ease of constructing a liquid surface and supporting a large time step size, but has obvious disadvantages: Solving the Poisson equation is extremely performance-consuming, the Euler method is extremely difficult to process a boundary, and especially liquid effect with a large deformation is difficult to present. However, fluid simulation has a large computational amount and a complex computational process, and is always a difficulty in the field of real-time physical simulation. Common manners cannot be used for a real-time simulation method or application on a mobile terminal. A root cause is that a computational resource on the mobile terminal is limited, and a computational requirement of real-time three-dimensional fluid simulation cannot be met.

Therefore, this application provides a rendering method, to construct interactive simulation rendering of substances in various forms by constructing a density field with a relatively small computational amount. In addition, the method may be deployed on a mobile terminal.

First, for ease of understanding, some terms related to rendering used in this application are described.

(1) Rendering

Rendering is a process of converting a 3D/2D model into a display image in an electronic device with a display function, and is widely applied in the fields such as games and movie special effect. In a broad sense, a rendering process includes modeling, material construction, animation construction, and rendering display.

(2) Physically based rendering (physic based rendering, PBR)

Physically based rendering means a collection of rendering technologies based on basic theories that are more consistent with physical principles of a real world in different degrees. A core is to simulate light on an object surface in a manner that is more consistent with a law of physics. This manner is more realistic than a conventional illumination algorithm based on a Phong illumination model or a Blinn-Phong illumination model. A representation form of PBR is closer to a physical property. Therefore, a surface material may be adjusted based on a physical parameter, so that illumination effect is more normal.

(3) Forward rendering (forward rendering) pipeline

Forward rendering is also referred to as forward shading (forward shading). The forward rendering pipeline traverses all light sources for each object in a scenario to compute a color to be finally displayed.

(4) Deferred rendering (deferred rendering) pipeline

The deferred rendering pipeline is proposed to address an issue that calculation time in forward rendering is linearly related to a quantity of light sources and a quantity of objects. In a rendering process, geometric information required for calculating illumination and shading of all to-be-rendered objects is rendered on several maps (G-buffer), and then a final illumination color is calculated by traversing pixels of the G-buffer. This is applicable to a scenario with a large number of rendering objects and a plurality of light sources.

(5) Lagrangian description

The Lagrangian description focuses on studying motion of one specific fluid particle, observes a change law of a motion parameter as the particle moves from one point to another point in a flow field, and obtain a motion law of all fluid particles in specific space with reference to motion of many fluid particles.

(6) Eulerian description

The Eulerian description focuses on one fixed point in space and examines how a fluid property (like density, a velocity, and temperature) change over time at this fixed point.

In addition, the rendering method provided in this application may be applied to various fluid rendering scenarios. The following uses some application scenarios as examples for description.

For example, in a scenario, the method provided in this application may be applied to some AR or VR applications, for example, applications such as shopping, game, and projection. For example, the rendering method provided in this application may be applied to an intelligent wearable device (for example, VR glasses/AR glasses), a mobile terminal (for example, a mobile phone or a tablet), or another device that can carry an AR application or a VR application. For example, an application program of the VR application may be installed on the wearable device, to provide a service for a user. The VR application may provide a plurality of three-dimensional scenarios for the user. The user may view the three-dimensional scenario in the VR application by using a display of the wearable device. This is equivalent to providing immersive experience for the user and improves user experience. For display of these three-dimensional scenarios, after a three-dimensional model is constructed, the three-dimensional model further needs to be rendered, to provide the user with visual experience in a form of a rendered image that is output by using the rendering method provided in this application.

For another example, in another scenario, the method provided in this application may be applied to an AR game. An application program of the AR game may be installed in a mobile terminal or a wearable device of the user, and the user may experience the AR game in an immersive manner by using the mobile terminal or the wearable device. This improves user experience. When the mobile terminal or the wearable device runs the AR game, a three-dimensional scenario in the game needs to be rendered, to present the three-dimensional scenario in a form of an image and render the three-dimensional scenario in the game by using the rendering method provided in this application. In this case, a rendered high-definition image can be obtained. This improves user experience.

In addition, the rendering method provided in this application may be applied to various electronic devices. The electronic device includes a CPU and a GPU, and can perform rendering processing on an image. Certainly, the electronic device may further include another device, for example, a network processor (neural-network processing unit, NPU), or an application-specific integrated circuit (application-specific integrated circuit, ASIC). This is merely an example for description herein, and details are not described one by one. For example, the electronic device may be a mobile phone (mobile phone), a tablet computer, a notebook computer, a PC, a mobile internet device (mobile internet device, MID), a wearable device, a virtual reality (virtual reality, VR) device, an augmented reality (augmented reality, AR) device, a wireless electronic device in industrial control (industrial control), a wireless electronic device in self-driving (self-driving), a wireless electronic device in remote surgery (remote medical surgery), a wireless electronic device in a smart grid (smart grid), a wireless electronic device in transportation safety (transportation safety), a wireless electronic device in a smart city (smart city), a wireless electronic device in a smart home (smart home), or the like. The electronic device may be a device that runs an Android system, an iOS system, a windows system, or another system. An application program that needs to render a 3D scenario to obtain a two-dimensional image may run in the electronic device, like a game application, a screen locking application, a map application, or a monitoring application.

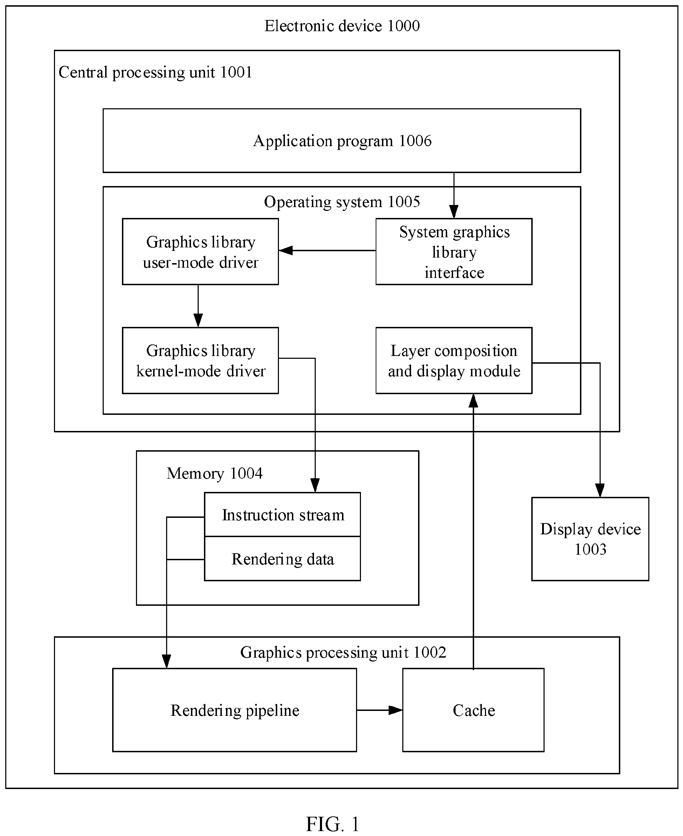

For ease of understanding, a specific structure of the electronic device is described in detail below with reference to FIG. 1. FIG. 1 is a diagram of a structure of an electronic device according to an embodiment of this application.

In a possible embodiment, as shown in FIG. 1, the electronic device 1000 may include: a central processing unit 1001, a graphics processing unit 1002, a display device 1003, and a memory 1004. Optionally, the electronic device 1000 may further include at least one communication bus (not shown in FIG. 1), configured to implement connection and communication between the components.

It should be understood that the components in the electronic device 1000 may alternatively be mutually coupled by using another connector, and the another connector may include various interfaces, transmission lines, buses, or the like. Alternatively, the components in the electronic device 1000 may be radioactively connected with the central processing unit 1001 as a center. In embodiments of this application, coupling is mutual electrical connection or communication, including direct connection or indirect connection performed by using another device.

The central processing unit 1001 and the graphics processing unit 1002 may also be connected in a plurality of manners, and are not limited to being connected in the manner shown in FIG. 1. The central processing unit 1001 and the graphics processing unit 1002 in the electronic device 1000 may be located on a same chip, or each may be an independent chip.

The following briefly describes functions of the central processing unit 1001, the graphics processing unit 1002, the display device 1003, and the memory 1004.

The central processing unit 1001 is configured to run an operating system 1005 and an application program 1006. The application program 1006 may be a graphics application program, like a game or a video player. The operating system 1005 provides a system graphics library interface. The application program 1006 generates an instruction stream used to render a graphic or an image frame and required related rendering data by using the system graphics library interface and a driver provided by the operating system 1005, like a graphics library user-mode driver and/or a graphics library kernel-mode driver. A system graphics library includes but is not limited to: an open graphics library for embedded system (open graphics library for embedded system, OpenGL ES), the Khronos platform graphics interface (the Khronos platform graphics interface), or Vulkan (a cross-platform drawing application programming interface). The instruction stream includes a series of instructions, and these instructions are usually instructions for calling the system graphics library interface.

Optionally, the central processing unit 1001 may include at least one of the following types of processors: an application processor, one or more microprocessors, a digital signal processor (digital signal processor, DSP), a microcontroller (microcontroller unit, MCU), an artificial intelligence processor, or the like.

The central processing unit 1001 may further include a necessary hardware accelerator, like an application-specific integrated circuit (application-specific integrated circuit, ASIC), a field programmable gate array (field programmable gate array, FPGA), or an integrated circuit configured to implement logical computing. The processing unit 1001 may be coupled to one or more data buses, to transmit data and instructions between the components in the electronic device 1000.

The graphics processing unit 1002 is configured to: receive a graphics instruction stream sent by the processing unit 1001, generate a rendering target by using a rendering pipeline (pipeline), and display the rendering target on the display device 1003 by using a layer composition and display module in the operating system. The rendering pipeline may also be referred to as a rendering pipeline, a pixel pipeline, or a pixel pipeline, and is a parallel processing unit configured to process a graphic signal in the graphics processing unit 1002. The graphics processing unit 1002 may include a plurality of rendering pipelines, and the plurality of rendering pipelines may mutually independently process graphic signals in parallel. For example, the rendering pipeline may perform some column operations in a process of rendering a graphic or an image frame. Typical operations may include vertex processing (Vertex Processing), primitive processing (Primitive Processing), rasterization (Rasterization), fragment processing (Fragment Processing), and the like.

Optionally, the graphics processing unit 1002 may include a general-purpose graphics processing unit that executes software, like a GPU or another type of dedicated graphics processing unit.

The display device 1003 is configured to display various images generated by the electronic device 1000. The image may be a graphical user interface (graphical user interface, GUI) in the operating system or image data (including a still image and video data) processed by the graphics processing unit 1002.

Optionally, the display device 1003 may include any suitable type of display, like a liquid crystal display (liquid crystal display, LCD), a plasma display, or an organic light-emitting diode (organic light-emitting diode, OLED) display.

The memory 1004 is a transmission channel between the central processing unit 1001 and the graphics processing unit 1002, and may be a double data rate synchronous dynamic random access memory (double data rate synchronous dynamic random access memory, DDR SDRAM), or another type of a cache.

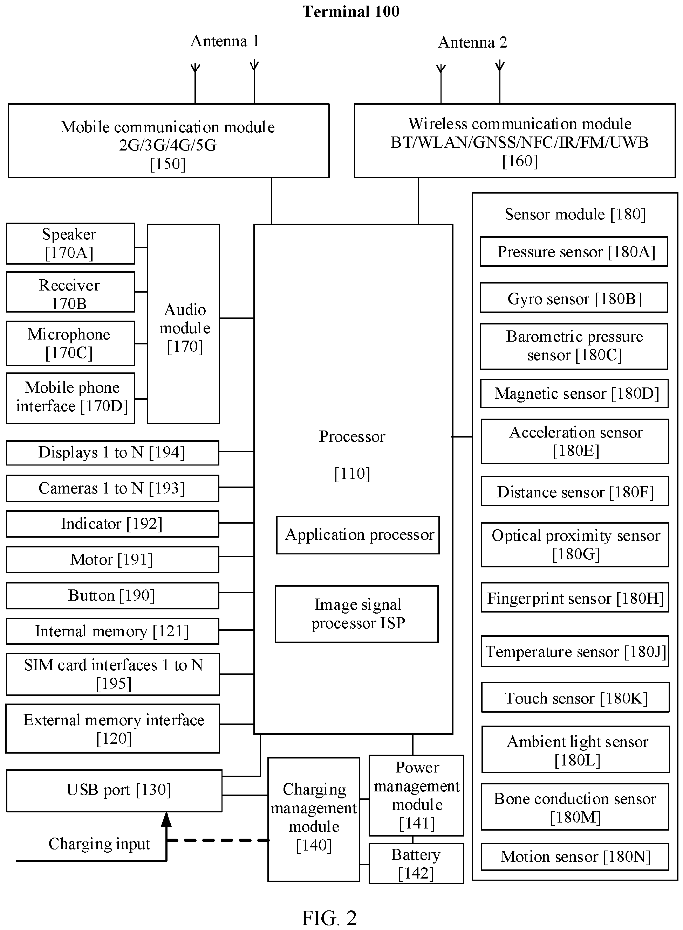

The foregoing describes the structure of the electronic device provided in this application. Refer to FIG. 2. The following uses a terminal as an example to describe, from a hardware perspective, a structure of the terminal provided in this application.

The terminal 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a motion sensor 180N, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be used for audio communication. In some embodiments, the processor 110 may include a plurality of groups of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus used for asynchronous communication. The bus may be a bidirectional communication bus. The bus converts to-be-transmitted data between serial communication and parallel communication. In some embodiments, the UART interface is usually used to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be used to connect the processor 110 and peripheral components such as the display 194 and the camera 193. The MIPI interface includes a camera serial interface (camera serial interface, CSI), a display serial interface (display serial interface, DSI), or the like. In some embodiments, the processor 110 communicates with the camera 193 through the CSI interface, to implement a photographing function of the terminal 100. The processor 110 communicates with the display 194 through the DSI interface, to implement a display function of the terminal 100.

The GPIO interface may be configured by software. The GPIO interface may be used as a control signal or as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB port 130 is an interface conforming to a USB standard specification, and specifically, may be a mini USB port, a micro USB port, a USB type-C port, or the like. The USB port 130 may be used to connect to a charger to charge the terminal 100, or transmit data between the terminal 100 and a peripheral device, or connect to a headset to play audio through the headset. The interface may be further used to connect to another electronic device, like an AR device. It should be understood that, the USB port 130 herein may alternatively be replaced with another interface, for example, an interface that may implement charging or data transmission, like a type-C interface or a lightning interface. Herein, the USB port 130 is merely used as an example for description.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input by using a wireless charging coil of the terminal 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution for wireless communication including 2G/3G/4G/5G and the like applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an ultra wideband (ultra wideband, UWB) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal 100 is coupled to the mobile communication module 150, and the antenna 2 is coupled to the wireless communication module 160, so that the terminal 100 may communicate with a network and another device by using a wireless communication technology. The wireless communication technology may include but is not limited to: a 5th-generation mobile communication technology (5th-Generation, 5G) system, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth (Bluetooth), a global navigation satellite system (the global navigation satellite system, GNSS), wireless fidelity (wireless fidelity, Wi-Fi), near field communication (near field communication, NFC), FM (may also be referred to as frequency modulation), a Zigbee (Zigbee) protocol, a radio frequency identification (radio frequency identification, RFID) technology, an infrared (infrared, IR) technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

In some implementations, the terminal 100 may further include a wired communication module (not shown in FIG. 1), or the mobile communication module 150 or the wireless communication module 160 herein may be replaced with a wired communication module (not shown in FIG. 1). The wired communication module may enable an electronic device to communicate with another device by using a wired network. The wired network may include but is not limited to one or more of the following: an optical transport network (optical transport network, OTN), a synchronous digital hierarchy (synchronous digital hierarchy, SDH), a passive optical network (passive optical network, PON), the Ethernet (Ethernet), the flex Ethernet (flex Ethernet, FlexE), or the like.

The terminal 100 implements a display function by using the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge-coupled device (charge-coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

An NPU is a neural-network (neural-network, NN) computing processor. The NPU quickly processes input information with reference to a structure of a biological neural network, for example, a transmission mode between human brain neurons, and may further continuously perform self-learning. Applications such as intelligent cognition of the terminal 100 may be implemented through the NPU, for example, image recognition, facial recognition, speech recognition, and text understanding.

The external memory interface 120 may be used to connect to an external memory card, for example, a micro SD card, to extend a storage capability of the terminal 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application program required by at least one function (for example, a sound playing function or an image playing function), and the like. The data storage region may store data (for example, audio data and a phone book) and the like created when the terminal 100 is used. In addition, the internal memory 121 may include a high-speed random access memory, and may further include a nonvolatile memory, for example, at least one magnetic disk storage device, a flash storage device, and a universal flash storage (universal flash storage, UFS). The processor 110 runs instructions stored in the internal memory 121 and/or instructions stored in the memory disposed in the processor, to perform various function applications and data processing of the terminal 100.

The terminal 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into analog audio signal output, and is further configured to convert analog audio input into a digital audio signal. The audio module 170 may be configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The terminal 100 may listen to music or answer a call in a hands-free mode by using the speaker 170A.

The receiver 170B, also referred to as an "earpiece", is configured to convert an electrical audio signal into a sound signal. When the terminal 100 receives a call or speech information, the terminal 100 may listen to a speech by placing the receiver 170B near an ear.

The microphone 170C, also referred to as a "mike" or a "microphone", is configured to convert a sound signal into an electrical signal. When making a call or sending a voice information, a user may make a sound near the microphone 170C through the mouth of the user, to input the sound signal to the microphone 170C. At least one microphone 170C may be disposed on the terminal 100. In some other embodiments, two microphones 170C may be disposed in the terminal 100, to collect a sound signal and further implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect wired earphones. The headset jack 170D may be the USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal 100 determines pressure intensity based on a change in the capacitance. When a touch operation acts on the display 194, the terminal 100 detects intensity of the touch operation based on the pressure sensor 180A. The terminal 100 may also calculate a touch position based on a signal detected by the pressure sensor 180A. In some embodiments, touch operations that are performed in a same touch position but have different touch operation intensity may correspond to different operation instructions. For example, when a touch operation whose touch operation intensity is less than a first pressure threshold is performed on a messaging application icon, an instruction for viewing an SMS message is executed. When a touch operation whose touch operation intensity is greater than or equal to the first pressure threshold is performed on the messaging application icon, an instruction for creating a new SMS message is executed.

The gyro sensor 180B may be configured to determine a motion posture of the terminal 100. In some embodiments, angular velocities of the terminal 100 around three axes (namely, axes x, y, and z) may be determined by using the gyro sensor 180B. The gyro sensor 180B may be configured to implement image stabilization during photographing. For example, when the shutter is pressed, the gyro sensor 180B detects a shake angle of the terminal 100, and calculates, based on the angle, a distance for which a lens module needs to compensate, so that the lens counteracts the shake of the terminal 100 through reverse motion, implementing image stabilization. The gyro sensor 180B may also be used in a navigation scenario and a somatic game scenario.

The barometric pressure sensor 180C is configured to measure barometric pressure. In some embodiments, the terminal 100 calculates an altitude based on a value of the barometric pressure measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect the opening and closing of the flip cover based on the magnetic sensor 180D. Further, a feature, like automatic unlocking when the cover is flipped open, is set based on a detected opening or closing state of the leather case or a detected opening or closing state of the cover.

The acceleration sensor 180E may detect values of accelerations of the terminal 100 in various directions (usually on three axes). A magnitude and a direction of gravity may be detected when the terminal 100 is still. The acceleration sensor 180E may be further configured to recognize a posture of the electronic device, and is used in screen switching between a landscape mode and a portrait mode, a pedometer, or another application.

The distance sensor 180F is configured to measure a distance. The terminal 100 may measure a distance in an infrared manner or a laser manner. In some embodiments, in a photographing scenario, the terminal 100 may measure the distance by using the distance sensor 180F, to implement fast focusing.

The optical proximity sensor 180G may include, for example, a light-emitting diode (LED) and a light detector, like a photodiode. The light-emitting diode may be an infrared light-emitting diode. The terminal 100 transmits infrared light by using the light-emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for talking, to automatically turn off the screen and save power. The optical proximity sensor 180G may also be used in a leather case mode or a pocket mode to automatically unlock or lock the screen.

The ambient light sensor 180L is configured to sense luminance of ambient light. The terminal 100 may adaptively adjust brightness of the display 194 based on the sensed ambient light brightness. The ambient light sensor 180L may also be configured to automatically adjust white balance during shooting. The ambient light sensor 180L may further cooperate with the optical proximity sensor 180G to detect whether the terminal 100 is in a pocket, to avoid an unintentional touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing strategy by using the temperature detected by the temperature sensor 180J. For example, when the temperature reported by the temperature sensor 180J exceeds a threshold, the terminal 100 degrades performance of a processor near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch control device". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor. The touch sensor may transmit the detected touch operation to the application processor to determine a type of a touch event. A visual output related to the touch operation may be provided on the display 194. In some other embodiments, the touch sensor 180K may alternatively be disposed on a surface of the terminal 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may further be in contact with a human pulse and receive a blood pressure beating signal. In some embodiments, the bone conduction sensor 180M may alternatively be disposed in the headset, to obtain a bone conduction headset. The audio module 170 may obtain a voice signal by parsing a vibration signal of a vibrating bone of a vocal-cord part obtained by the bone conduction sensor 180M, to implement a voice function. The application processor may parse heart rate information based on the blood pressure pulse signal obtained by the bone conduction sensor 180M, to implement a heart rate detection function.

The motion sensor 180N may be configured to: detect a moving object within a photographing range of a camera, and collect a moving contour, a moving trajectory, or the like of the moving object. For example, the motion sensor 180N may be an infrared sensor, a laser sensor, or a dynamic vision sensor (dynamic vision sensor, DVS). The DVS may specifically include a sensor like a DAVIS (Dynamic and Active-pixel Vision Sensor), an ATIS (Asynchronous Time-based Image Sensor), or a CeleX sensor. The DVS draws on a biological vision feature. Each pixel simulates one neuron and independently responds to a relative change in illumination intensity (hereinafter briefly referred to as "illumination intensity"). When the relative change in the light intensity exceeds a threshold, a pixel outputs an event signal, where the event signal includes a location of the pixel, a time stamp, and feature information of the light intensity.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to produce an incoming call vibration prompt and a touch vibration feedback. For example, touch operations performed on different applications (for example photographing and audio play) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect a SIM card. The SIM card may be inserted into the SIM card interface 195 or pulled out of the SIM card interface 195, so that the SIM card is in contact with and separated from the terminal 100. The terminal 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 is compatible to different types of SIM cards. The SIM card interface 195 may also be compatible with an external storage card. The terminal 100 interacts with the network by using the SIM card, to implement a call function, a data communication function, and the like. In some embodiments, the terminal 100 uses an eSIM, namely, an embedded SIM card. The eSIM card may be embedded in the terminal 100, and cannot be separated from the terminal 100.

It should be noted that, in some actual application scenarios, the electronic device may include more or fewer components than those shown in FIG. 1. Specifically, a quantity of components may be adjusted based on an actual application scenario. This is not limited in this application.

With reference to the electronic device, the following describes a rendering method provided in this application.

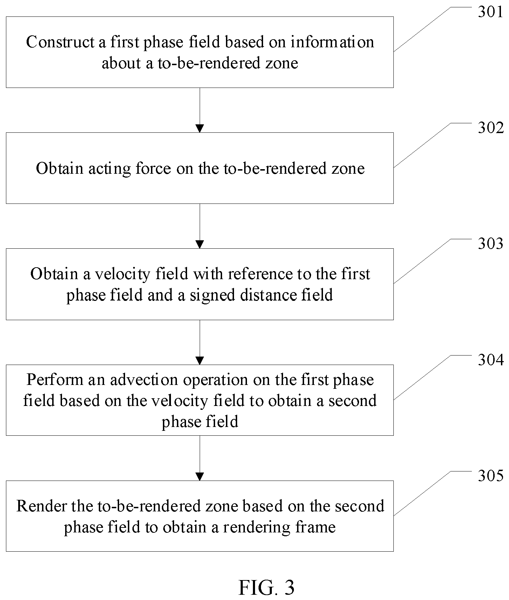

FIG. 3 is a schematic flowchart of a rendering method according to this application, which is described as follows:

301: Construct a first phase field based on information about a to-be-rendered zone.

The information about the to-be-rendered zone may include information such as a location, a type, or a size of a to-be-rendered object in the to-be-rendered zone. A phase field may include density distribution of the to-be-rendered object distributed in the to-be-rendered zone, and is referred to as the first phase field herein for ease of differentiation.

In addition, a signed distance field of the to-be-rendered zone may be further constructed. The signed distance field includes distance distribution between each point in the to-be-rendered zone and an origin. The origin may include a point at a center or on a boundary of the to-be-rendered object in the to-be-rendered zone, a central point of the to-be-rendered zone, a random point in the to-be-rendered zone, a point specified by a user in the to-be-rendered zone, or the like. The to-be-rendered object may include a geometric graphic in the to-be-rendered zone.

The to-be-rendered zone may include a zone that needs to be rendered and that is specified by a user in a specific frame of image, a to-be-rendered zone that is obtained through construction based on a given fluid in an initial state, or the like. The to-be-rendered zone may include one or more to-be-rendered geometric graphics. Different types of geometric graphics usually may have different attributes. For example, a geometric graphic corresponding to a fluid may be deformed, but a geometric graphic corresponding to a solid is not likely to be deformed under relatively small external force.

In addition, in this implementation of this application, when the phase field and the signed distance field are constructed, the to-be-rendered zone may be divided into a plurality of grids based on a preset granularity. A smaller granularity usually indicates a larger computational amount required subsequently, and certainly a higher definition frame obtained through rendering. A larger granularity indicates a smaller computational amount required subsequently. Therefore, the granularity may be determined based on computing power of an electronic device or a user requirement, to adapt to the computing power of the electronic device or meet the user requirement. This improves user experience.

Specifically, initial density is set for each sub-zone in the to-be-rendered zone based on the type of the to-be-rendered object in the to-be-rendered zone, to obtain the first phase field. Initial density in the fluid is different from initial density of the solid. In other words, the initial density in the fluid is different from initial density outside the fluid. Each sub-zone in the to-be-rendered zone is a zone obtained through division based on the preset granularity. The signed distance field is constructed based on a distance between each of the fluid and the solid in the to-be-rendered zone and the origin, to indicate a distance between each point in the to-be-rendered zone and the origin.

Therefore, in this implementation of this application, distribution of each geometric graphic in the to-be-rendered zone may be indicated by using the phase field and the signed distance field, to facilitate subsequent rendering.

Optionally, the to-be-rendered zone may be displayed on a display device in real time, so that the user can intuitively observe a rendering process of the to-be-rendered zone. The display device may be a display disposed in a PC, a display disposed in a terminal, or the like.

302: Obtain acting force on the to-be-rendered zone.

The acting force on the to-be-rendered zone is external force that causes the fluid to flow, that is, a fluid form in the to-be-rendered zone changes under action of the acting force. Therefore, a changing state of the fluid is computed by performing a subsequent computational step, to render a picture in which the fluid changes with the acting force, so that the user can observe in real time.

Specifically, a direction and a value of the acting force may be obtained. The direction may affect a flow direction of the fluid. Therefore, when an advection operation or a diffusion operation is subsequently performed, an advection direction, a diffusion direction, or the like may be determined based on the direction, to implement rendering effect of the fluid flowing under action of the external force.

When the rendering method provided in this application is applied to the terminal, the acting force may be from a sensor disposed in the terminal, like a gravity sensor, an acceleration sensor, a distance sensor, a gyro sensor, a pressure sensor, a temperature sensor, or a touch sensor, or may be from a touchscreen of the terminal. A touch sensor is disposed in the touchscreen, and a touch operation performed by the user on the to-be-rendered zone is detected by using the touch sensor, to obtain information such as a position or pressure of generating touch. In this case, the acting force is obtained.

For example, when the user rotates the terminal device, a rotation direction of the terminal may be obtained, and the rotation direction is converted into a corresponding gravity value based on a value fed back by the gravity sensor, to obtain the acting force on the to-be-rendered zone.

303: Obtain a velocity field with reference to the first phase field and the signed distance field.

After the acting force on the to-be-rendered zone is obtained, the fluid flows under the action of the acting force. A physical equation may be constructed with reference to the first phase field and the signed distance field, to obtain, by solving the physical equation, the velocity field of fluid flow, namely, velocity distribution corresponding to each point in the to-be-rendered zone.

It may be understood that the fluid moves under the action of the external force. After the acting force on the fluid in the to-be-rendered zone is detected, a pressure Poisson equation may be constructed with reference to the first phase field and the signed distance field. The velocity field, namely, a motion velocity of each point in the to-be-rendered zone, is obtained through calculation by using the pressure Poisson equation.

For example, the pressure Poisson equation may be constructed with reference to the phase field and the signed distance field based on a phase field corresponding to each of gas, the liquid, and the solid. Smoothing processing is performed on a point corresponding to a gas-liquid boundary and a solid-liquid boundary by using a difference. Then, the velocity field of the to-be-rendered zone is obtained through calculation by using a Jacobi iteration algorithm.

Specifically, for example, the pressure Poisson equation may be expressed as follows:

$$\nabla\left(\frac{1}{\rho}\mathrm{p}\right) = \frac{\nabla \cdot v^t}{\Delta t}.$$

p indicates pressure. When the acting force is gravity, the pressure may be determined based on atmospheric pressure. When the acting force is other force, the pressure may be calculated based on a scenario that needs to be simulated. v indicates a velocity. $\Delta t$ indicates a time step. $\rho$ indicates density.

Therefore, if the pressure and the density are known, the velocity field of the to-be-rendered zone may be obtained, that is, the flow velocity of the fluid under the action of the external force may be obtained.

304: Perform the advection operation on the first phase field based on the velocity field to obtain a second phase field.

After the velocity field is obtained, the advection operation may be performed on the first phase field based on the velocity field, to simulate density distribution after a deformation of the fluid under the action of the external force. In this case, a phase field after the deformation is obtained, which is referred to as the second phase field for ease of differentiation.

Specifically, the fluid in the to-be-rendered zone flows under the action of the external force. In this case, fluid distribution of the fluid in the to-be-rendered zone changes. The advection operation may be performed on the first phase field, to obtain a phase field after a change in the fluid distribution, namely, the second phase field. It may be understood that, after the velocity field is obtained, the flow velocity of the fluid may be determined. A velocity at which the fluid is deformed may be calculated based on the flow velocity, to calculate a density change in the to-be-rendered zone in a unit time. Then, the density distribution after the deformation of the fluid is obtained, to facilitate subsequent rendering.

In a possible implementation, to adapt to computing power of the terminal, the advection operation may be performed in a plurality of directions, to obtain the second phase field.

Optionally, the advection operation may be performed in the plurality of directions based on the velocity field by using a first-order upwind difference scheme, to obtain the second phase field. For example, for three-dimensional rendering, the advection operation may be separately performed in six directions. In addition, the advection operation may be further performed in a direction like backward Euler or forward Euler, to calculate a position of the fluid at a next moment with reference to a position and a velocity of each point at a current moment.

In a possible implementation, the fluid velocity may usually change. Therefore, the advection operation may be further performed on the velocity field to obtain an updated velocity field. Optionally, the advection operation on the velocity field may alternatively be performed in a manner like semi-implicit backward Euler or forward Euler. It may be understood that, the fluid velocity may usually change due to impact of gravity, friction force, obstacle blocking, a container limitation, or the like. Therefore, to simulate a flow status of the fluid more realistically, a flow velocity of the fluid at a next moment may be calculated based on a flow velocity of the fluid at a current moment in the manner like the semi-implicit backward Euler or forward Euler, to more accurately predict a phase field change of the fluid at the next moment.

In a possible implementation, the to-be-rendered object in the to-be-rendered zone may include the fluid and the solid. To maintain fluid volume conservation in the to-be-rendered zone, a fluid part that penetrates into the solid is diffused in a corresponding gradient direction in the signed distance field, to update the second phase field to obtain a new second phase field. Therefore, when the fluid and the solid exist in the to-be-rendered zone, the diffused part may undergo diffusion when the fluid is diffused to the solid, so that the fluid volume conservation is maintained in the to-be-rendered zone. This adapts to various fluid deformations.

305: Render the to-be-rendered zone based on the second phase field to obtain a rendering frame.

After the density distribution after the fluid flows under the action of the external force is obtained, rendering may be performed based on the density distribution after the deformation, to simulate a flow state of the fluid.

Therefore, in this implementation of this application, a phase field, namely, a density field, for the to-be-rendered zone is constructed, so that real-time rendering is performed on the to-be-rendered zone through density rendering, to more accurately indicate a motion status of the fluid. This implement more realistic effect of a fluid model obtained through rendering. It may be understood that, because the obtained phase field is numerically continuous, both an iso-surface extraction manner and a ray casting manner can well match rendering, and an extracted liquid surface is smooth and particle-free. This can fit an irregular boundary well. In addition, a simulation result is stored in a GPU and can be directly transmitted for rendering, and no memory copy is needed. Therefore, memory consumption caused by rendering can be minimized.

In a possible implementation, in a rendering process, a dynamic balance operation may be performed on the phase field, to maintain a boundary form. Specifically, a phase field gradient of the second phase field may be calculated. The gradient may indicate a flow direction from a low-density zone to a high-density zone in the to-be-rendered zone, and density of each point in the low-density zone is not greater than density of each point in the high-density zone. In this case, a new phase field is obtained. For ease of differentiation, the new phase field is referred to as a third phase field. Then, rendering is performed based on density distribution of the to-be-rendered zone included in the third phase field to obtain the rendering frame.

In a possible implementation, a smoothing operation may be performed on the third phase field, to implement dynamic balance of the phase field at the gas-liquid boundary. This improves rendering accuracy. Specifically, the smoothing operation may be performed on the third phase field, for example, an average value or a linear difference of the boundary is obtained, to obtain a new phase field. For ease of differentiation, the new phase field is referred to as a fourth phase field. Then, rendering is performed based on the fourth phase field to obtain a final rendering frame.

The foregoing describes the procedure of the rendering method provided in this application. For ease of understanding, the following describes the procedure of the rendering method provided in this application in more detail with reference to a specific application scenario.

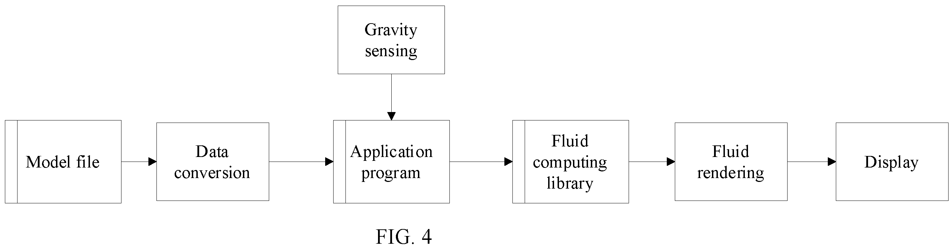

First, refer to FIG. 4. The following uses an example in which the method provided in this application is applied to the terminal, to describe an overall framework of graphics rendering.

First, a model file includes a container boundary model, an initial fluid data model, a collision object model, and the like. A container may be understood as a sandbox (sandbox). To implement isolation between sandboxes/containers/applications, a boundary needs to be defined for the container, so that the containers do not interfere with each other.

Data conversion means to convert the model file into a distance field, a phase field, or the like that can be processed by a fluid algorithm.

An application program means an application running in a mobile terminal, and may include, for example, gravity sensing processing logic, which converts gravity sensing data into gravity that affects fluid flow.

A fluid computing library includes processing logic for performing fluid simulation, a rendering-related compute shader (compute shader), and the like, which may be understood as an execution step shown in FIG. 3 in this application.

Fluid rendering means to render an output of computing performed by using the fluid computing library. A specific rendering manner may be a cube algorithm (Marching Cube), ray casting (ray casting), or the like.

After rendering is completed, a rendering result can be sent for display. A real-time rendering image frame obtained through rendering is displayed on a display interface.

Specifically, data conversion, application program running, and the like shown in FIG. 4 may be performed by a CPU in the electronic device, and corresponding steps in the fluid computing library and fluid rendering may be performed by the GPU.

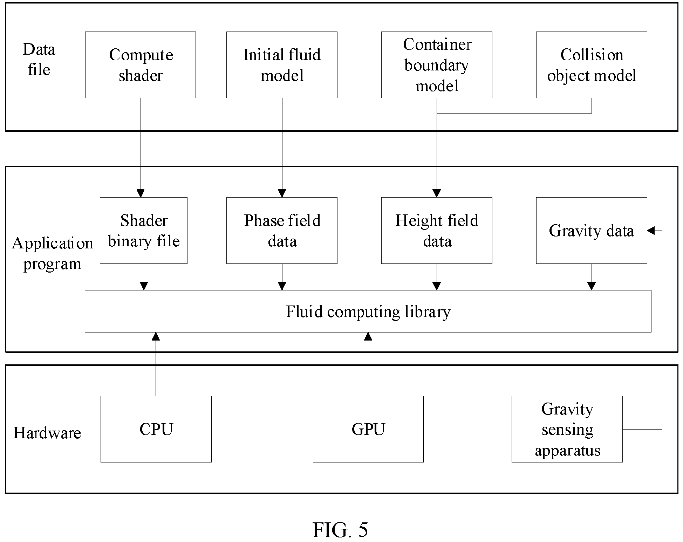

For a more detailed architecture, refer to FIG. 5. An architecture of the terminal deployed by using the rendering method provided in this application is described from perspectives of data, an application, and hardware.

A data file may include the compute shader, an initial fluid model, the container boundary model, the collision object model, and the like. Hardware needs to invoke the CPU, the GPU, a gravity sensing apparatus, and the like.

Then, the data file is processed by using application software, for example, including the following:

converting the compute shader into a shader binary file. The compute shader contains a parallel computing algorithm of the fluid computing library;
modeling the fluid into a weakly compressible fluid by using the phase field, and outputting phase field data; and
modeling the gas, liquid, and solid into a continuous medium by using a height field (namely, the signed distance field), and outputting height field data.

In addition, this embodiment uses an example in which gravity is obtained as the acting force by using the gravity sensing apparatus. The application program processes the gravity sensing data, and converts the gravity sensing data into gravity data that may affect fluid flow in the fluid computing library.

Then, the application program transmits all original data to the fluid computing library, and executes computing logic included in the fluid computing library by using the CPU and the GPU, to output the rendering frame.

Specifically, the GPU may be invoked to perform, with reference to the phase field data, the height field data, shader binary, and the like, computing steps included in the fluid computing library, and some conventional scheduling and memory usage of the CPU may be invoked.

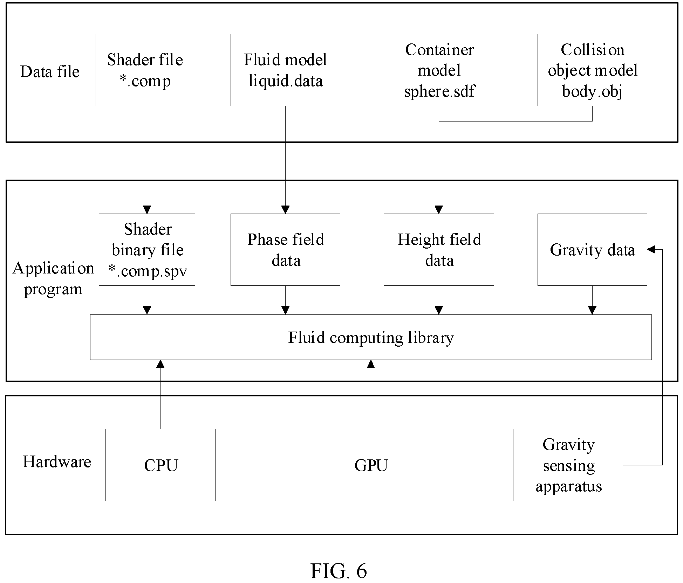

Further, refer to FIG. 6. Some specific data is used as an example.

The data file may include a shader file, denoted as *.comp, the fluid model is denoted as liquid.data, a container model is denoted as sphere.sdf, and the collision object model is denoted as body.obj.

The *.comp file is converted into the shader binary denoted as *.comp.spv by using the application program. The phase field data is obtained by using liquid.data for modeling, the height field data is obtained by using sphere.sdf and body.obj for modeling, and the gravity data is obtained by using data extracted from the gravity sensor.

A computing algorithm in the fluid computing library may include one or more of the following: parallel computing (parallel computing), Jacobi iteration (Jacobi iteration), advection (advection) computing, pressure projection computing (projection), and the like. All these may be computed in parallel by using the GPU, to implement real-time rendering.

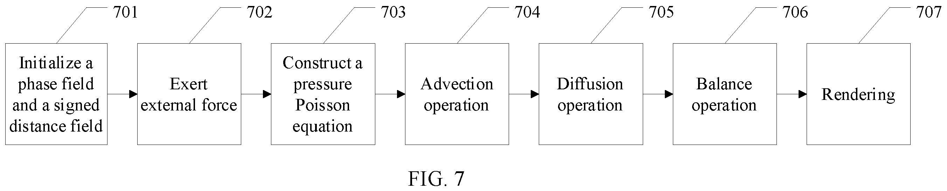

Refer to FIG. 7. The following describes in more detail the procedure of the rendering method provided in this application with reference to the architectures in FIG. 4 to FIG. 6.

701: Initialize a phase field and a signed distance field.

First, a three-phase simulation scenario of gas, liquid and a solid is indicated together with reference to the phase field and the signed distance field. A fluid computational domain is discretized into the phase field, where a value inside the fluid is set to 1, and a value outside the fluid is set to 0, that is, 1 in the phase field indicates the fluid, 0 indicates a non-fluid, and a boundary is set as a smooth transition band. Then a solid boundary is further converted into the signed distance field, and the phase field and the signed distance field are separately discretized and stored using a three-dimensional array. The signed distance field is stored in a center of each grid point, and indicates a distance from the center of the grid point to the solid boundary. A value outside a solid zone is greater than 0, and a value inside the solid zone is less than 0.

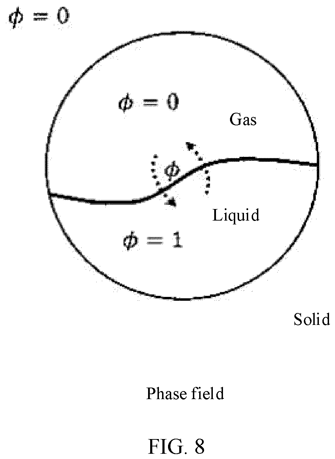

For example, a to-be-rendered zone may be divided into a plurality of grids based on a specific granularity, and the phase field may be shown in FIG. 8. In the phase field, a density value inside the fluid may be set to 1, and a density value outside the fluid may be set to 0. It may be understood that in the phase field of the to-be-rendered zone, 1 indicates the fluid, and 0 indicates the non-fluid.

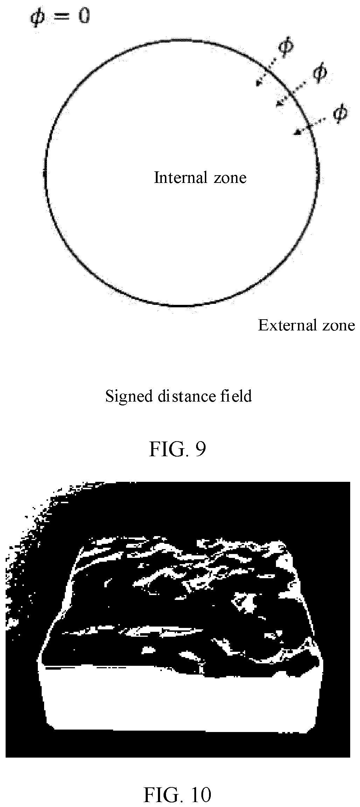

For another example, the signed distance field may be shown in FIG. 9. The to-be-rendered zone may be divided into the plurality of grids based on the specific granularity. The signed distance field is set for the solid in the to-be-rendered zone, and may indicate a distance between the solid boundary and a point other than the solid in the to-be-rendered zone. For example, a distance inside the solid may be set to 0, indicating that a point is located inside the solid, and each point outside the solid may be set based on a distance between the point and a nearest solid boundary, to determine a relative position change between each point of the fluid and the solid if the solid is at a fixed position.

702: Exert external force.

The external force may be from a sensor of a terminal, for example, a gravity sensor, an acceleration sensor, a distance sensor, a gyro sensor, a pressure sensor, a temperature sensor, or a touch sensor. For example, a rotation direction of a mobile device may be obtained by using the gravity sensor, and the rotation direction is converted into a corresponding gravity value based on a feedback value of the gravity sensor.

703: Construct a pressure Poisson equation.

The pressure Poisson equation is constructed with reference to the phase field, the signed distance field, and the gas, liquid and solid. Smoothing processing is performed on a grid of the gas-liquid boundary by using a difference strategy, and the equation is finally solved by using a Jacobi iteration algorithm.

For example, an expression of the pressure Poisson equation is

$$\nabla\left(\frac{1}{\rho}\mathrm{p}\right) = \frac{\nabla \cdot v^t}{\Delta t}$$

.

p indicates pressure. v indicates a velocity. Δt indicates a time step. $\rho$ indicates density.

Calculation of the density $\rho$ may be expressed in the following form: $p = \omega\rho^s + (1 - \omega)((1 - \phi)\rho^a + \phi\rho^l)$. $\omega = \phi\min(\phi + d, 1)$.

$\rho^s$ indicates solid density. $\rho^a$ indicates gas density. $\rho^a$ indicates liquid density. $\phi$ indicates a liquid volume fraction. $d$ indicates a solid volume fraction, for example, a ratio of grids occupied by the solid in the to-be-rendered zone.

704. Advection operation.

The advection operation is separately performed on the phase field and a velocity field with reference to the current velocity field. It may be understood that flow simulation is performed on the phase field and the velocity field of the fluid through the advection operation.

Specifically, the advection operation may be performed on the phase field in a manner like a first-order upwind difference scheme, forward Euler, backward Euler, or the like, to ensure fluid volume conservation.

In addition, due to a limitation that a GPU on a mobile terminal does not support an atomic operation, the advection operation on the phase field and the velocity field can be independently performed in six directions. Certainly, if the method provided in this application is deployed in a device that can support the atomic operation, the advection operation in the step may also be directly performed through the atomic operation. This is not limited in this application.

Further, the advection operation on the velocity field is performed by using a semi-implicit backward Euler method.

705. Diffusion operation.

The diffusion operation is performed on a fluid part that penetrates into the solid zone with reference to the signed distance field, and a part of the fluid whose phase field is greater than 0 is diffused in a gradient direction in the signed distance field. An expression of a diffusion process based on the distance field is as follows:

$$\frac{\partial \phi}{\partial t} = \max(\phi - d, 0)\,\nabla\varphi$$

$\phi$ indicates the signed distance field. Further, to avoid the atomic operation, an integration process is independently performed in six directions, to perform parallel integration in the terminal. This improves rendering efficiency, and implements real-time rendering.

706. Balance operation.

The dynamic balance operation is performed on the phase field to maintain a boundary form. The dynamic balance operation of the phase field is divided into two parts: a sharpening operation and a smoothing operation.

In the sharpening operation, the fluid flows from a low-density zone to a high-density zone by calculating a phase field gradient. A specific calculation formula is as follows:

$$\phi''' = \phi' - \Delta t\alpha\nabla(\frac{\phi'(1 - \phi')}{w^{t+1}}n)$$

The smoothing operation is performed on the sharpened phase field, to implement dynamic balance of the phase field at a gas-liquid boundary. A calculation formula of the smoothing operation may be expressed as follows:

$$\phi^{t+1} = \phi'' + \alpha\Delta t\nabla^2\phi^{t+1}$$

707: Rendering.

A specific rendering manner may be selected based on an actual application scenario. For example, physically based rendering (physic based rendering, PBR), deferred rendering (deferred rendering) pipeline, multisampling anti-aliasing (multisampling anti-aliasing, MSAA), or rendering by using a neural network may be selected. Specifically, the rendering manner may be selected based on the actual application scenario. This is not limited in this application.

For ease of more intuitive understanding, the following describes effect of this embodiment of this application with reference to a rendered image generated in an application scenario.

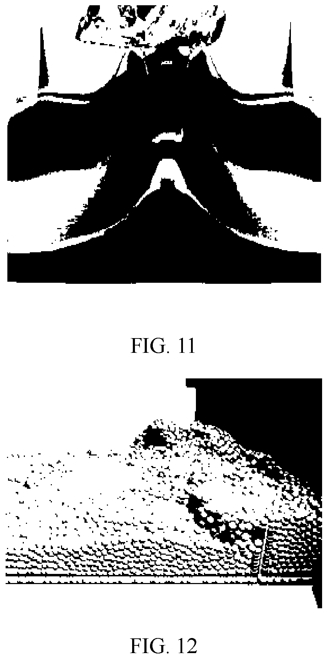

For a difficulty in constructing a smooth liquid surface, for example, after fluid simulation is completed, it is not easy to extract the smooth fluid surface, if a Lagrange-based method is used, because the fluid is discretized into particles, although running simulation can be performed relatively quickly, rendering effect of the liquid surface is relatively poor, the surface is unsmooth, and even a convex ball exists. However, the method provided in this application uses a solution method described by Euler, an incompressible fluid is implemented by using the phase field, and a numerically continuous phase field is obtained by using a density expression formula, to facilitate extraction of the smooth fluid surface. It may be understood that this embodiment of this application can use the Euler method to implement the incompressible fluid by using the phase field. The obtained phase field is a numerically continuous density field. A relatively small density iso-surface is selected as a fluid surface, to obtain the smooth fluid surface, and no particle exists. In addition, because the obtained phase field is numerically continuous, both an iso-surface extraction manner and a ray casting manner can well match rendering, and an extracted liquid surface is smooth and particle-free. This can fit an irregular boundary well. In addition, a simulation result stored in a GPU can be directly transmitted for rendering, and no memory copy is needed. Therefore, memory consumption caused by rendering can be minimized. For example, for a rendering fluid obtained through rendering in the Lagrange manner, refer to FIG. 10. For a fluid obtained through rendering in this embodiment of this application, refer to FIG. 11. Clearly, the fluid obtained through rendering by using the method provided in this application is closer to a real fluid.

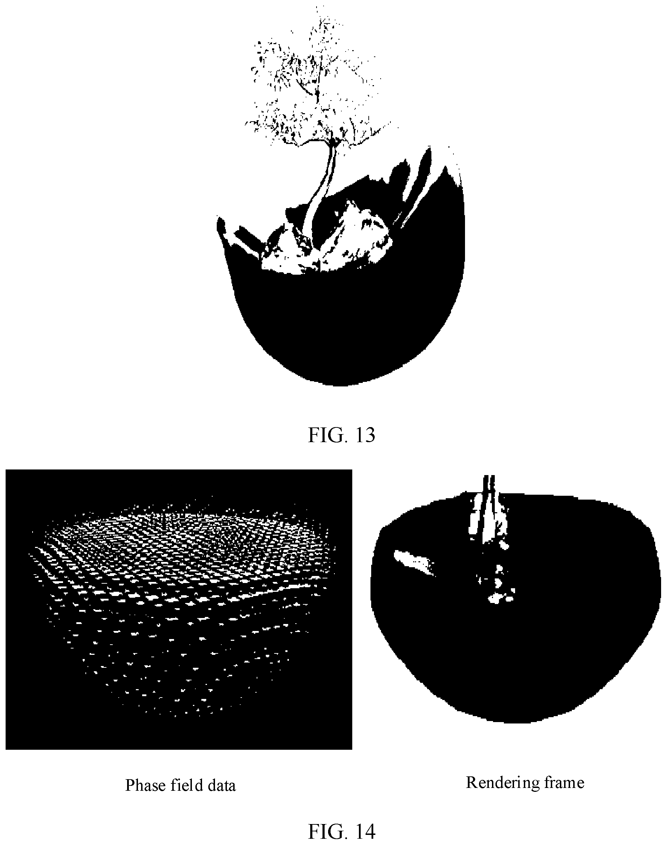

For a difficulty in implementing real-time interaction simulation of three phase materials, namely, the gas, the liquid, and the solid, it is easiest to implement real-time fluid simulation in which the three phase materials are coupled by using the Lagrange method, because in this method, a particle domain with a physical attribute indicates a fluid zone, and each particle has a physical attribute like mass and a velocity, and can be subject to collision force. However, it is usually difficult to implement real-time simulation on the mobile terminal, and a rendering scenario in which the fluid and solid are coupled implemented on a PC terminal may be shown in FIG. 12. However, in this application, gas, liquid, and solid are modeled into a continuous medium by using the signed distance field, and the same pressure Poisson equation is constructed, to implement same modeling and solution of a dynamic issue including three phases, namely, the gas, liquid, and solid. In addition, an optimized solution algorithm is used. This implements real-time interaction simulation of three phase materials, namely, the gas, the liquid, and the solid. This application can support a boundary and collision object material of any shape, and implement real-time interaction simulation of the three phase materials, namely, the gas, the liquid, and the solid, as shown in FIG. 13.

For a difficulty in implementing real-time fluid simulation for the mobile terminal, a solution process of fluid simulation is usually complex, and a large quantity of numerical calculation processes are involved, resulting in a large performance loss. In addition, a computational resource of the mobile terminal is limited, and cannot support basic real-time fluid simulation. According to the solution provided in this application, real-time fluid simulation is implemented on a premise of the limited computational resource of the mobile terminal. This application uses a solution method based on the Eulerian description. The phase field is introduced to discretize the fluid computational domain, the density calculation manner is used to accelerate solution of the Poisson equation, and parallel computing acceleration is implemented by using an algorithm suitable for the GPU running on the mobile terminal. Real-time fluid simulation and rendering functions are implemented on the mobile terminal. In addition, gravity sensing is supported, and a fluid moves in a gravity sensing direction. This improves user experience. FIG. 14 is a diagram of phase field distribution and final rendering effect. Table 1 includes measured data obtained through rendering by using the mobile terminal.

**Table 1**

| Grid scale | Fluid simulation frame rate |
|---|---|
| 32*32*32 | 38 fps |
| 64*64*64 | 23 fps |

Therefore, according to the method provided in this application, for a difficulty in quickly reconstructing the smooth fluid surface, this application uses the Euler method by using the phase field to discretize the fluid computational domain, to solve for the numerically continuous density field. This quickly extracts a density iso-surface, and quickly reconstructs a fluid surface. For the difficulty in implementing real-time interaction simulation of three phase materials, namely, the gas, the liquid, and the solid, in this application, with reference to the signed distance field, the gas, liquid, and solid are modeled into a continuous medium, and a same equation is constructed, to implement same modeling and solution of a dynamic issue including three phases, namely, the gas, liquid, and solid. For the difficulty in implementing real-time fluid simulation for the mobile terminal, this application uses the density calculation manner to accelerate the solution of the Poisson equation, and implements parallel computing acceleration by using the algorithm suitable for the GPU running on the mobile terminal.

The foregoing describes in detail the procedure of the rendering method provided in this application. The following describes an apparatus for performing the rendering method provided in this application.

This application provides an electronic device. The electronic device may include a central processing unit (central processing unit, CPU) and a graphics processing unit (graphics processing unit, GPU).

The GPU is configured to construct a first phase field based on information about a to-be-rendered zone, where the first phase field indicates density distribution in the to-be-rendered zone.

The CPU is configured to: obtain acting force on the to-be-rendered zone, and transmit the acting force to the GPU.

The GPU is further configured to obtain a velocity field based on the first phase field, where a fluid in the to-be-rendered zone flows under action of the acting force, and the velocity field includes velocity distribution of each point in the to-be-rendered zone.

The GPU is further configured to perform an advection operation on the first phase field based on the velocity field to obtain a second phase field, where the second phase field includes density distribution obtained by performing the advection operation on the fluid in the to-be-rendered zone.

The GPU is further configured to render the to-be-rendered zone based on the second phase field to obtain a rendering frame.

In a possible implementation, the GPU is further configured to: obtain a signed distance field of the to-be-rendered zone, where the signed distance field includes distance distribution between each point in the to-be-rendered zone and an object in the to-be-rendered zone; and obtain the velocity field with reference to the first phase field and the signed distance field.

In a possible implementation, a to-be-rendered object in the to-be-rendered zone includes a fluid and a solid, and the GPU is further configured to: before rendering the to-be-rendered zone based on the second phase field, diffuse, in a corresponding gradient direction in the signed distance field, a fluid part that penetrates into the solid, to update the second phase field to obtain a new second phase field.

In a possible implementation, the GPU is specifically configured to perform the advection operation on the first phase field in a plurality of directions based on the velocity field to obtain the second phase field.

In a possible implementation, the GPU is specifically configured to perform the advection operation on the first phase field in the plurality of directions based on the velocity field by using a first-order upwind difference scheme, to obtain the second phase field.

In a possible implementation, the GPU is further configured to perform the advection operation on the velocity field to obtain an updated velocity field.

In a possible implementation, the GPU is specifically configured to: obtain a third phase field by using a gradient of the second phase field, where the gradient of the second phase field indicates that the fluid flows from a low-density zone to a high-density zone in the to-be-rendered zone, and density of each point in the high-density zone is greater than density of each point in the low-density zone; and perform rendering based on density distribution of the to-be-rendered zone included in the third phase field to obtain the rendering frame.

In a possible implementation, the GPU is specifically configured to: perform a smoothing operation on the third phase field to obtain a fourth phase field; and perform rendering based on density distribution of the to-be-rendered zone included in the fourth phase field to obtain the rendering frame.

In a possible implementation, a type of the to-be-rendered object in the to-be-rendered zone includes the fluid and the solid.

The GPU is specifically configured to set initial density for each sub-zone in the to-be-rendered zone based on the type of the to-be-rendered object in the to-be-rendered zone, to obtain the first phase field, where initial density in the fluid is different from initial density of the solid, and each sub-zone in the to-be-rendered zone is a zone obtained through division based on a preset granularity.

In a possible implementation, the electronic device further includes a sensor or a touchscreen, and the CPU is specifically configured to obtain the acting force on the to-be-rendered zone based on the sensor, or obtain the acting force on the to-be-rendered zone based on pressure sensed by using the touchscreen.

In a possible implementation, the GPU is specifically configured to: construct a pressure Poisson equation based on the first phase field; and solve the pressure Poisson equation to obtain the velocity field.

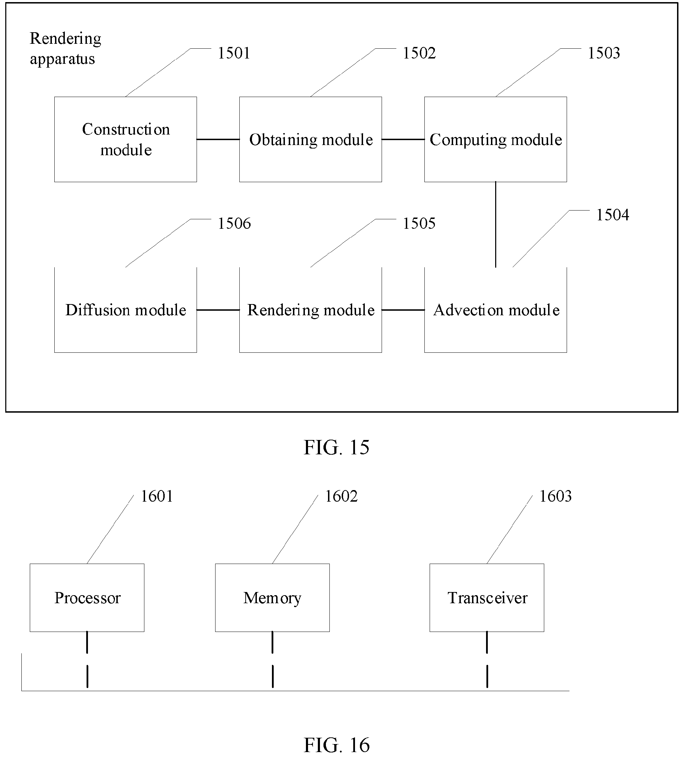

FIG. 15 is a diagram of a structure of a rendering apparatus according to this application. The rendering apparatus may include:

a construction module 1501, configured to construct a first phase field based on information about a to-be-rendered zone, where the first phase field indicates density distribution in the to-be-rendered zone;

an obtaining module 1502, configured to obtain acting force on the to-be-rendered zone;

a computing module 1503, configured to obtain a velocity field with reference to the first phase field and a signed distance field, where the velocity field includes velocity distribution of each point in the to-be-rendered zone;

an advection module 1504, configured to perform an advection operation on the first phase field based on the velocity field to obtain a second phase field, where the second phase field includes density distribution obtained by performing the advection operation on the fluid in the to-be-rendered zone; and

a rendering module 1505, configured to render the to-be-rendered zone based on the second phase field to obtain a rendering frame.

In a possible implementation, the construction module 1501 is further configured to obtain a signed distance field of the to-be-rendered zone, where the signed distance field includes distance distribution between each point in the to-be-rendered zone and an object in the to-be-rendered zone.

The computing module 1503 is specifically configured to obtain the velocity field with reference to the first phase field and the signed distance field.

In a possible implementation, a to-be-rendered object in the to-be-rendered zone includes a fluid and a solid, and the rendering apparatus further includes:

a diffusion module 1506, configured to: before the rendering module renders the to-be-rendered zone based on the second phase field, diffuse, in a corresponding gradient direction in the signed distance field, a fluid part that penetrates into the solid, to update the second phase field to obtain a new second phase field.

In a possible implementation, the advection module 1504 is specifically configured to perform the advection operation in a plurality of directions based on the velocity field to obtain the second phase field.

In a possible implementation, the advection module 1504 is specifically configured to perform the advection operation in the plurality of directions based on the velocity field by using a first-order upwind difference scheme, to obtain the second phase field.

In a possible implementation, the advection module 1504 is further configured to perform the advection operation on the velocity field to obtain an updated velocity field.

In a possible implementation, the rendering module 1505 is specifically configured to: obtain a third phase field by using a gradient of the second phase field, where the gradient of the second phase field indicates that the fluid flows from a low-density zone to a high-density zone in the to-be-rendered zone, and density of each point in the high-density zone is greater than density of each point in the low-density zone; and perform rendering based on density distribution of the to-be-rendered zone included in the third phase field to obtain the rendering frame.

In a possible implementation, the rendering module 1505 is specifically configured to: perform a smoothing operation on the third phase field to obtain a fourth phase field; and perform rendering based on density distribution of the to-be-rendered zone included in the fourth phase field to obtain the rendering frame.

In a possible implementation, the type of the to-be-rendered object in the to-be-rendered zone includes the fluid and the solid, and the construction module 1501 is specifically configured to: set initial density for each sub-zone in the to-be-rendered zone based on the type of the to-be-rendered object in the to-be-rendered zone, to obtain the first phase field, where initial density in the fluid is different from initial density of the solid, and each sub-zone in the to-be-rendered zone is a zone obtained through division based on a preset granularity; and construct the signed distance field based on a distance between the solid in the to-be-rendered zone and a solid boundary in the to-be-rendered zone.

In a possible implementation, the apparatus is used in a terminal, and the obtaining module 1502 is specifically configured to: obtain the acting force on the to-be-rendered zone based on a sensor of the terminal, or obtain the acting force on the to-be-rendered zone based on pressure sensed by the terminal by using a touchscreen.

In a possible implementation, the computing module 1503 is specifically configured to: construct a pressure Poisson equation with reference to the first phase field and the signed distance field; and solve the pressure Poisson equation to obtain the velocity field.

FIG. 16 is another diagram of a structure of a rendering apparatus according to this application, which is described as follows:

The rendering apparatus may include a processor 1601 and a memory 1602. The processor 1601 and the memory 1602 are interconnected by using a line. The memory 1602 stores program instructions and data.

The memory 1602 stores the program instructions and data that correspond to steps in FIG. 3 to FIG. 14. More specifically, the processor may be a processor configured to process an image, for example, a GPU or a CPU configured to process an image.

The processor 1601 is configured to perform the method steps performed by the rendering apparatus in any one of the foregoing embodiments in FIG. 3 to FIG. 14.

Optionally, the rendering apparatus may further include a transceiver 1603, configured to receive or send data.

An embodiment of this application further provides a computer-readable storage medium. The computer-readable storage medium stores a program. When the program runs on a computer, the computer is enabled to perform steps in the methods described in the embodiments shown in FIG. 3 to FIG. 14.

Optionally, the rendering apparatus shown in FIG. 16 is a chip.

An embodiment of this application further provides a rendering apparatus. The training apparatus may alternatively be referred to as a digital processing chip or a chip. The chip includes a processing unit and a communication interface. The processing unit obtains program instructions through the communication interface, the program instructions are executed by the processing unit, and the processing unit is configured to perform the method steps in any one of the foregoing embodiments in FIG. 3 to FIG. 14.

An embodiment of this application further provides a digital processing chip. A circuit and one or more interfaces that are configured to implement the processor 1601 or a function of the processor 1601 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements the method steps in the foregoing embodiments based on program code stored in the external memory.

An embodiment of this application further provides a computer program product. When the computer program product runs on a computer, the computer is enabled to perform the method steps in any one of the foregoing embodiments in FIG. 3 to FIG. 14.

The image processing apparatus or training apparatus provided in this embodiment of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in a server to perform the rendering methods described in the embodiments shown in FIG. 3 to FIG. 14. Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

Specifically, the processing unit or the processor may include a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. A general-purpose processor may be a microprocessor, or any conventional processor.

In addition, it should be noted that the described apparatus embodiments are only examples. The units described as separate parts may or may not be physically separate, and parts displayed as units may or may not be physical units, may be located in one location, or may be distributed on a plurality of network units. Some or all of the modules may be selected based on actual requirements to achieve the objectives of the solutions in embodiments. In addition, in the accompanying drawings of the apparatus embodiments provided in this application, a connection relationship between modules indicates that the modules have a communication connection with each other, and may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, technical solutions of this application essentially or a part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the process or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In the specification, claims, and accompanying drawings of this application, the terms "first", "second", "third", "fourth", and the like (if exist) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, the terms "include", "contain" and any other variants mean to cover the non-exclusive inclusion, for example, a process, method, system, product, or device that includes a series of steps or units is not necessarily limited to those steps or units, but may include another step or unit that is not expressly illustrated or that is inherent to the process, method, system, product, or device.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A rendering method, comprising:

   constructing a first phase field based on information about a to-be-rendered zone, wherein the first phase field indicates density distribution in the to-be-rendered zone;
   obtaining acting force on the to-be-rendered zone;
   obtaining a velocity field based on the first phase field, wherein a fluid in the to-be-rendered zone flows under action of the acting force, and the velocity field comprises velocity distribution of each point in the to-be-rendered zone;
   performing an advection operation on the first phase field based on the velocity field to obtain a second phase field, wherein the second phase field comprises density distribution obtained by performing the advection operation on the fluid in the to-be-rendered zone; and
   rendering the to-be-rendered zone based on the second phase field to obtain a rendering frame.

2. The method according to claim 1, wherein the method further comprises:

   obtaining a signed distance field of the to-be-rendered zone, wherein the signed distance field comprises distance distribution between each point in the to-be-rendered zone and an object in the to-be-rendered zone; and
   the obtaining a velocity field based on the first phase field comprises:
   obtaining the velocity field with reference to the first phase field and the signed distance field.

3. The method according to claim 1 or 2, wherein before the rendering the to-be-rendered zone based on the second phase field, the method further comprises:
   the to-be-rendered object in the to-be-rendered zone comprises a fluid and a solid, and diffusing, in a corresponding gradient direction in the signed distance field, a fluid part that penetrates into the solid, to update the second phase field to obtain a new second phase field.

4. The method according to any one of claims 1 to 3, wherein the performing an advection operation on the first phase field based on the velocity field to obtain a second phase field comprises:
   performing the advection operation on the first phase field in a plurality of directions based on the velocity field to obtain the second phase field.

5. The method according to claim 4, wherein the performing the advection operation in a plurality of directions based on the velocity field to obtain the second phase field comprises:
   performing the advection operation on the first phase field in the plurality of directions based on the velocity field by using a first-order upwind difference scheme, to obtain the second phase field.

6. The method according to claim 4 or 5, wherein the method further comprises:
   performing the advection operation on the velocity field to obtain an updated velocity field.

7. The method according to any one of claims 1 to 6, wherein the rendering the to-be-rendered zone based on the second phase field to obtain a rendering frame comprises:

   obtaining a third phase field by using a gradient of the second phase field, wherein the gradient of the second phase field indicates that the fluid flows from a low-density zone to a high-density zone in the to-be-rendered zone, and density of points in the high-density zone is greater than density of points in the low-density zone; and
   performing rendering based on density distribution of the to-be-rendered zone comprised in the third phase field to obtain the rendering frame.

8. The method according to claim 7, wherein the performing rendering based on density distribution of the to-be-rendered zone comprised in the third phase field to obtain the rendering frame comprises:

   performing a smoothing operation on the third phase field to obtain a fourth phase field; and
   performing rendering based on density distribution of the to-be-rendered zone comprised in the fourth phase field to obtain the rendering frame.

9. The method according to any one of claims 1 to 8, wherein a type of the to-be-rendered object in the to-be-rendered zone comprises the fluid and the solid, and the constructing a first phase field based on information about a to-be-rendered zone comprises:
   setting initial density for each sub-zone in the to-be-rendered zone based on the type of the to-be-rendered object in the to-be-rendered zone, to obtain the first phase field, wherein initial density in the fluid is different from initial density of the solid, and each sub-zone in the to-be-rendered zone is a zone obtained through division based on a preset granularity.

10. The method according to any one of claims 1 to 9, applied to a terminal, wherein the obtaining acting force on the to-be-rendered zone comprises:

obtaining the acting force on the to-be-rendered zone based on a sensor of the terminal, or obtaining the acting force on the to-be-rendered zone based on pressure sensed by the terminal by using a touchscreen.

11. The method according to any one of claims 1 to 10, wherein the obtaining a velocity field based on the first phase field comprises:

constructing a pressure Poisson equation based on the first phase field; and
solving the pressure Poisson equation to obtain the velocity field.

12. A rendering apparatus, comprising:

a construction module, configured to construct a first phase field based on information about a to-be-rendered zone, wherein the first phase field indicates density distribution in the to-be-rendered zone;
an obtaining module, configured to obtain acting force on the to-be-rendered zone;
a computing module, configured to obtain a velocity field based on the first phase field, wherein a fluid in the to-be-rendered zone flows under action of the acting force, and the velocity field comprises velocity distribution of each point in the to-be-rendered zone;
an advection module, configured to perform an advection operation on the first phase field based on the velocity field to obtain a second phase field, wherein the second phase field comprises density distribution obtained by performing the advection operation on the fluid in the to-be-rendered zone; and
a rendering module, configured to render the to-be-rendered zone based on the second phase field to obtain a rendering frame.

13. The apparatus according to claim 12, wherein

the construction module is further configured to obtain a signed distance field of the to-be-rendered zone, wherein the signed distance field comprises distance distribution between each point in the to-be-rendered zone and an object in the to-be-rendered zone; and
the computing module is specifically configured to obtain the velocity field with reference to the first phase field and the signed distance field.

14. The apparatus according to claim 13, wherein the to-be-rendered object in the to-be-rendered zone comprises a fluid and a solid, and the apparatus further comprises:
a diffusion module, configured to: before the rendering module renders the to-be-rendered zone based on the second phase field, diffuse, in a corresponding gradient direction in the signed distance field, a fluid part that penetrates into the solid, to update the second phase field to obtain a new second phase field.

15. The apparatus according to any one of claims 12 to 14, wherein
the advection module is specifically configured to perform the advection operation on the first phase field in a plurality of directions based on the velocity field to obtain the second phase field.

16. The apparatus according to claim 15, wherein
the advection module is specifically configured to perform the advection operation on the first phase field in the plurality of directions based on the velocity field by using a first-order upwind difference scheme, to obtain the second phase field.

17. The apparatus according to claim 15 or 16, wherein
the advection module is further configured to perform the advection operation on the velocity field to obtain an updated velocity field.

18. The apparatus according to any one of claims 12 to 17, wherein the rendering module is specifically configured to:

obtain a third phase field by using a gradient of the second phase field, wherein the gradient of the second phase field indicates that the fluid flows from a low-density zone to a high-density zone in the to-be-rendered zone, and density of points in the high-density zone is greater than density of points in the low-density zone; and
perform rendering based on density distribution of the to-be-rendered zone comprised in the third phase field to obtain the rendering frame.

19. The apparatus according to claim 18, wherein the rendering module is specifically configured to:

perform a smoothing operation on the third phase field to obtain a fourth phase field; and
perform rendering based on density distribution of the to-be-rendered zone comprised in the fourth phase field to obtain the rendering frame.

20. The apparatus according to any one of claims 12 to 19, wherein a type of the to-be-rendered object in the to-be-rendered zone comprises the fluid and the solid, and the construction module is specifically configured to:
set initial density for each sub-zone in the to-be-rendered zone based on the type of the to-be-rendered object in the to-be-rendered zone, to obtain the first phase field, wherein initial density in the fluid is different from initial density of the solid, and each sub-zone in the to-be-rendered zone is a zone obtained through division based on a preset granularity.

21. The apparatus according to any one of claims 12 to 20, used in a terminal, wherein
the obtaining module is specifically configured to: obtain the acting force on the to-be-rendered zone based on a sensor of the terminal, or obtain the acting force on the to-be-rendered zone based on pressure sensed by the terminal by using a touchscreen.

22. The apparatus according to any one of claims 12 to 21, wherein the computing module is specifically configured to:

construct a pressure Poisson equation based on the first phase field; and
solve the pressure Poisson equation to obtain the velocity field.

23. An electronic device, comprising a central processing unit CPU and a graphics processing unit GPU, wherein

the GPU is configured to construct a first phase field based on information about a to-be-rendered zone, wherein the first phase field indicates density distribution in the to-be-rendered zone;
the CPU is configured to: obtain acting force on the to-be-rendered zone, and transmit the acting force to the GPU;
the GPU is further configured to obtain a velocity field based on the first phase field, wherein a fluid in the to-be-rendered zone flows under action of the acting force, and the velocity field comprises velocity distribution of each point in the to-be-rendered zone;
the GPU is further configured to perform an advection operation on the first phase field based on the velocity field to obtain a second phase field, wherein the second phase field comprises density distribution obtained by performing the advection operation on the fluid in the to-be-rendered zone; and
the GPU is further configured to render the to-be-rendered zone based on the second phase field to obtain a rendering frame.

24. The electronic device according to claim 23, wherein the GPU is further configured to:

obtain a signed distance field of the to-be-rendered zone, wherein the signed distance field comprises distance distribution between each point in the to-be-rendered zone and an object in the to-be-rendered zone; and
obtain the velocity field with reference to the first phase field and the signed distance field.

25. The electronic device according to claim 23 or 24, wherein the to-be-rendered object in the to-be-rendered zone comprises a fluid and a solid, and the GPU is further configured to: before rendering the to-be-rendered zone based on the second phase field, diffuse, in a corresponding gradient direction in the signed distance field, a fluid part that penetrates into the solid, to update the second phase field to obtain a new second phase field.

26. The electronic device according to any one of claims 23 to 25, wherein the GPU is specifically configured to perform the advection operation on the first phase field in a plurality of directions based on the velocity field to obtain the second phase field.

27. The electronic device according to claim 26, wherein the GPU is specifically configured to perform the advection operation on the first phase field in the plurality of directions based on the velocity field by using a first-order upwind difference scheme, to obtain the second phase field.

28. The electronic device according to claim 26 or 27, wherein the GPU is further configured to perform the advection operation on the velocity field to obtain an updated velocity field.

29. The electronic device according to any one of claims 23 to 28, wherein the GPU is specifically configured to:

obtain a third phase field by using a gradient of the second phase field, wherein the gradient of the second phase field indicates that the fluid flows from a low-density zone to a high-density zone in the to-be-rendered zone, and density of points in the high-density zone is greater than density of points in the low-density zone; and
perform rendering based on density distribution of the to-be-rendered zone comprised in the third phase field to obtain the rendering frame.

30. The electronic device according to claim 29, wherein the GPU is specifically configured to:

perform a smoothing operation on the third phase field to obtain a fourth phase field; and
perform rendering based on density distribution of the to-be-rendered zone comprised in the fourth phase field to obtain the rendering frame.

**31.** The electronic device according to any one of claims 23 to 30, wherein a type of the to-be-rendered object in the to-be-rendered zone comprises the fluid and the solid; and

the GPU is specifically configured to set initial density for each sub-zone in the to-be-rendered zone based on the type of the to-be-rendered object in the to-be-rendered zone, to obtain the first phase field, wherein initial density in the fluid is different from initial density of the solid, and each sub-zone in the to-be-rendered zone is a zone obtained through division based on a preset granularity.

**32.** The electronic device according to any one of claims 23 to 31, wherein the electronic device further comprises a sensor or a touchscreen, and the CPU is specifically configured to obtain the acting force on the to-be-rendered zone based on the sensor, or obtain the acting force on the to-be-rendered zone based on pressure sensed by using the touchscreen.

**33.** The electronic device according to any one of claims 23 to 32, wherein the GPU is specifically configured to:

construct a pressure Poisson equation based on the first phase field; and
solve the pressure Poisson equation to obtain the velocity field.

**34.** A rendering apparatus, comprising a processor, wherein the processor is coupled to a memory, the memory stores a program, and when program instructions stored in the memory are executed by the processor, the steps in the method according to any one of claims 1 to 11 are performed.

**35.** A computer-readable storage medium, comprising a program, wherein when the program is executed by a processing unit, the steps in the method according to any one of claims 1 to 11 are performed.

**36.** A computer program product, wherein the computer program product comprises software code, and the software code is used to perform the steps in the method according to any one of claims 1 to 11.

Electronic device 1000

Central processing unit 1001

Application program 1006

Operating system 1005

Graphics library
user-mode driver

System graphics
library
interface

Graphics library
kernel-mode driver

Layer composition
and display module

Memory 1004

Instruction stream

Rendering data

Display device
1003

Graphics processing unit 1002

Rendering pipeline

Cache

FIG. 1

**Terminal 100**

FIG. 2

Construct a first phase field based on information about a to-be-rendered zone — 301

Obtain acting force on the to-be-rendered zone — 302

Obtain a velocity field with reference to the first phase field and a signed distance field — 303

Perform an advection operation on the first phase field based on the velocity field to obtain a second phase field — 304

Render the to-be-rendered zone based on the second phase field to obtain a rendering frame — 305

FIG. 3

Gravity
sensing

| Model file | → | Data conversion | → | Application program | → | Fluid computing library | → | Fluid rendering | → | Display |

FIG. 4

FIG. 5

FIG. 6

FIG. 7

701 Initialize a phase field and a signed distance field

702 Exert external force

703 Construct a pressure Poisson equation

704 Advection operation

705 Diffusion operation

706 Balance operation

707 Rendering

Phase field

FIG. 8

$\phi = 0$

Internal zone

External zone

Signed distance field

FIG. 9

FIG. 10

FIG. 11

FIG. 12

FIG. 13

Phase field data                           Rendering frame

FIG. 14

Rendering apparatus

Construction module 1501

Obtaining module 1502

Computing module 1503

Diffusion module 1506

Rendering module 1505

Advection module 1504

FIG. 15

Processor 1601

Memory 1602

Transceiver 1603

FIG. 16

|  |  |
|---|---|
| **INTERNATIONAL SEARCH REPORT** | International application No.<br><br>**PCT/CN2023/100345** |

| A. | CLASSIFICATION OF SUBJECT MATTER |
|---|---|

G06T15/00(2011.01)i

According to International Patent Classification (IPC) or to both national classification and IPC

| B. | FIELDS SEARCHED |
|---|---|

Minimum documentation searched (classification system followed by classification symbols)

G06T,G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 渲染, 相场, 密度场, 速度场, 作用力, 外力, 平流操作, 有向距离, 梯度, 泊松方程, render+, phase w field, density w field, speed w field, external, force, advect+ w operation, signed w distance w field, SDF, gradient, poisson w equation

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 102938160 A (SHANGHAI JIAO TONG UNIVERSITY) 20 February 2013 (2013-02-20) description, paragraphs 0039-0065 | 1-36 |
| Y | CN 112560326 A (TENCENT TECHNOLOGY (SHENZHEN) CO., LTD. et al.) 26 March 2021 (2021-03-26) description, paragraphs 0051-0077 | 1-36 |
| Y | CN 107085629 A (EAST CHINA NORMAL UNIVERSITY) 22 August 2017 (2017-08-22) description, paragraphs 0059-0120 | 1-36 |
| Y | CN 111292405 A (TENCENT TECHNOLOGY (SHENZHEN) CO., LTD.) 16 June 2020 (2020-06-16) description, paragraph 0100 | 2, 3, 13, 14, 24, 25 |
| A | US 2010134509 A1 (MATSUO, Y.) 03 June 2010 (2010-06-03) entire document | 1-36 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2023** | **15 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/100345**

| Patent document cited in search report | | | Publication date (day/month/year) | Patent family member(s) | | | Publication date (day/month/year) |
|---|---|---|---|---|---|---|---|
| CN | 102938160 | A | 20 February 2013 | None | | | |
| CN | 112560326 | A | 26 March 2021 | None | | | |
| CN | 107085629 | A | 22 August 2017 | None | | | |
| CN | 111292405 | A | 16 June 2020 | EP | 4006844 | A1 | 01 June 2022 |
| | | | | WO | 2021155690 | A1 | 12 August 2021 |
| | | | | KR | 20220044587 | A | 08 April 2022 |
| | | | | JP | 2023501120 | A | 18 January 2023 |
| | | | | US | 2022207821 | A1 | 30 June 2022 |
| | | | | HK | 40024672 | A0 | 18 December 2020 |
| US | 2010134509 | A1 | 03 June 2010 | JP | 2010134654 | A | 17 June 2010 |

Form PCT/ISA/210 (patent family annex) (July 2022)

**EP 4 517 673 A1**

**Patent documents cited in the description**

- CN 202210687770